# EUROPEAN PATENT APPLICATION

(11) **EP 4 742 041 A1**
(43) Date of publication of application: **13.05.2026**
(21) Application number: 25160762.8
(22) Date of filing: 27.02.2025
(51) Int. Cl.: G06F 11/07, G06F 11/14, G06F 11/18, G06F 11/20, G06F 11/30

(54) **SOFTWARE DEFINED VEHICLE WITH FUNCTIONALLY SAFE CONTROLLER AND METHOD OF PROVIDING FUNCTIONAL SAFETY THEREOF**

(30) Priority: 12.11.2024 IN 202441087228; 27.12.2024 US 202419003798
(71) Applicant: Wipro Limited, 560 035 Karnataka (IN)
(72) Inventor: SARKAR, Arnik, 742103 Murshidabad (IN); Sayanshree, GHOSH, 700136 Kolkata (IN)
(74) Representative: Finnegan Europe LLP

(57) **Abstract**

A software defined vehicle (SDV) with functionally safe controller and method of providing functional safety is disclosed. The SDV includes a plurality of controllers. Each of the plurality of controllers includes a safety island configurable to perform a plurality of services corresponding to one or more automotive safety integrity levels (ASILs) from a plurality of ASILs. A performance island configurable to perform a plurality of micro-services corresponding to one or more remaining ASILs from the plurality of ASILs. The performance island includes at least one node that includes at least one container configurable to perform one or more of the plurality of micro-services.

## Description

### CROSS-REFERENCE TO RELATED APPLICATIONS

This application is a Non-Provisional Application, which claims priority to the Indian provisional patent application No. 202441087228, filed November 12, 2024, entitled "SYSTEM AND METHOD FOR ENSURING FUNCTIONAL SAFETY IN A SOFTWARE DEFINED VEHICLE."

### Technical Field

This disclosure relates generally to operation of software defined vehicles, and more particularly to software defined vehicle with functionally safe controller and method of providing functional safety thereof.

### BACKGROUND

In recent years, modern automobiles have become increasingly dependent on embedded electronic systems which incorporate numerous Electronic Control Units (ECUs), sensors, bus systems, and advanced technologies such as cameras, radar, and lidar. These components collectively manage various vehicle functions, from essential control systems to sophisticated features like adaptive cruise control, collision avoidance, and automated parking, etc. In modern vehicles, there can be numerous ECUs, each dedicated to specific tasks. However, with the rise of high-performance computers (HPC) in the automotive industry, this traditional architecture is evolving. Instead of being managed by a multitude of ECUs, new vehicle architectures consolidate these functionalities into a number of HPCs which leads to a significant shift towards software-defined vehicles (SDVs).

Despite these advancements, providing the functional safety of SDVs presents new challenges. SDVs employ increased use of automation, connectivity, and electrification, and integrate data-center-level capabilities to support advanced features such as autonomous driving, infotainment systems, and real-time mapping, etc. The transition to software-defined architectures, where vehicle features are broken down into micro-services deployed on location-agnostic controllers, creates new points of potential failure. As vehicle functions become more dependent on complex software, the need for robust fault detection and recovery mechanisms grows significantly. Existing fail-safe systems focus primarily on fail-safe methods that ensure stopping of the vehicle in an event of a fault. However, such fail-safe methods lack a fault-operational approach that would allow continued safe operation after a fault is detected. Existing fail-safe systems for fault management in autonomous and software-defined vehicles may fall short in several critical areas. They often fail to provide sufficient redundancy across controller platform level and other essential components.

Therefore, there is a need for a functionally safe controller and a methodology to provide functional safety of the controller.

### SUMMARY OF THE INVENTION

**In** an embodiment, a software defined vehicle (SDV) is disclosed. The SDV may include a plurality of controllers. Each of the plurality of controllers may include a safety island configurable to perform a plurality of services corresponding to one or more automotive safety integrity levels (ASILs) from a plurality of ASILs. Each of the plurality of controllers may further include a performance island configurable to perform a plurality of micro-services corresponding to one or more remaining ASILs from the plurality of ASILs. In an embodiment, the performance island may include at least one node that may include at least one container configurable to perform one or more of the plurality of micro-services. In an embodiment, the one of the plurality of controllers may be dynamically configurable as a Vehicle Safety Monitor (VSM) and a voter based on a predefined priority order. In an embodiment, the VSM may be configured to dynamically select a set of controllers from remaining of the plurality of controllers based on a determination of one of a plurality of modes of the SDV. In an embodiment, the set of controllers may be configured to simultaneously perform at least one of the plurality of micro-services.

In another embodiment, a functionally safe automotive controller of a software defined vehicle (SDV) is disclosed. The controller may include a safety island configurable to perform a plurality of services corresponding to one or more automotive safety integrity levels (ASILs) from a plurality of ASILs. The controller may further include a performance island configurable to perform a plurality of micro-services corresponding to one or more remaining safety levels from the plurality of ASILs. In an embodiment, the performance island may include at least one node that may include at least one container configurable to perform one or more of the plurality of micro-services.

In another embodiment, a method of providing functional safety of a controller of a software defined vehicle (SDV) is disclosed. The method may include dynamically configuring one of a plurality of controllers as a Vehicle Safety Monitor (VSM) and a voter based on a predefined priority order. The method may further include dynamically selecting, by the VSM, a set of controllers from remaining of the plurality of controllers based on a determination of one of a plurality of modes of the SDV. In an embodiment, each of the plurality of controllers may include a safety island configurable to perform a plurality of services corresponding to one or more automotive safety integrity levels (ASILs) from a plurality of ASILs. The each of the plurality of controllers may also include a performance island configurable to perform a plurality of micro-services corresponding to one or more remaining ASILs from the plurality of ASILs. In an embodiment, the performance island may include at least one node that may include at least one container configurable to perform one or more of the plurality of micro-services. In an embodiment, the set of controllers may be configured to simultaneously perform at least one of the plurality of micro-services.

In yet another embodiment, a non-transitory computer-readable medium storing computer-executable instructions for providing functional safety of a controller of a software defined vehicle (SDV) is disclosed. The computer-executable instructions configured for dynamically configuring one of a plurality of controllers as a Vehicle Safety Monitor (VSM) and a voter based on a predefined priority order. The computer-executable instructions may be further configured for dynamically selecting, by the VSM, a set of controllers from remaining of the plurality of controllers based on a determination of one of a plurality of modes of the SDV. In an embodiment, each of the plurality of controllers may include a safety island configurable to perform a plurality of services corresponding to one or more automotive safety integrity levels (ASILs) from a plurality of ASILs. In an embodiment, each of the plurality of controllers may further include a performance island configurable to perform a plurality of micro-services corresponding to one or more remaining ASILs from the plurality of ASILs. The performance island may include at least one node that may include at least one container configurable to perform one or more of the plurality of micro-services. In an embodiment, the set of controllers may be configured to simultaneously perform at least one of the plurality of micro-services.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
**FIG. 1** is a block diagram of an exemplary system for providing functional safety in a software defined vehicle (SDV), in accordance with an embodiment of the present disclosure.
**FIG. 2A** and **FIG. 2B** illustrate a structural diagram of the system including a plurality of controllers of **FIG. 1****,** in accordance with an embodiment of the present disclosure.
**FIG. 3** illustrates a functional architecture of each of the plurality of controllers of **FIG. 1****,** in accordance with an exemplary embodiment of the present disclosure.
**FIG. 4** illustrates fault monitoring in each of the plurality of controllers of **FIG. 3****,** in accordance with an embodiment of the present disclosure.
**FIG. 5** illustrates a state diagram depicting transition of operation modes of the SDV, in accordance with an exemplary embodiment of the present disclosure.
**FIG. 6A, FIG. 6B, FIG. 6C** and **FIG. 6D** depict architecture flow diagrams depicting fault tolerance mechanism for handling failures in the plurality of controllers, in accordance with an exemplary embodiment of the present disclosure.
**FIG. 7A, FIG. 7B and FIG. 7C** illustrate sensor architecture flow diagrams depicting fault tolerance in multiple operational modes of the SDV, in accordance with an exemplary embodiment of the present disclosure.
**FIG. 8** illustrates a network bus topology of network buses within the SDV, in accordance with an embodiment of the present disclosure.
**FIG. 9** illustrates a state diagram depicting transition of safety states of the controller, in accordance with an exemplary embodiment of the present disclosure.
**FIG. 10** illustrates a flow diagram depicting execution flow in normal mode for the SDV, in accordance with an exemplary embodiment of the present disclosure.
**FIG. 11** illustrates a flow diagram depicting execution flow in degraded mode for the SDV, in accordance with an exemplary embodiment of the present disclosure.
**FIG. 12** illustrates another flow diagram depicting execution flow in the degraded mode for the SDV, in accordance with an exemplary embodiment of the present disclosure.
**FIG. 13A** and **FIG. 13B** illustrate a flowchart of a method for providing functional safety of a controller of the SDV, in accordance with an embodiment of the present disclosure.

### DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. Further, the phrases "in some embodiments," "in accordance with some embodiments," "in the embodiments shown," "in other embodiments," and the like, mean a particular feature, structure, or characteristic following the phrase is included in at least one embodiment of the present disclosure and may be included in more than one embodiment. In addition, such phrases do not necessarily refer to the same embodiments or different embodiments.

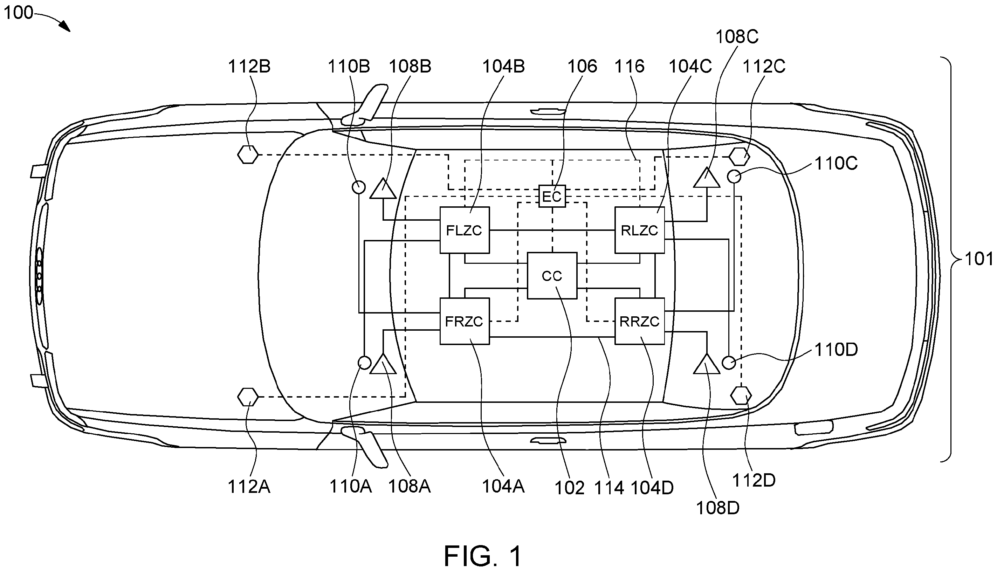

Referring now to **FIG. 1****,** a block diagram of an exemplary system 100 for providing functional safety in a software defined vehicle (SDV) 101 is illustrated, in accordance with an embodiment of the present disclosure. The system 100 is based on a software-defined vehicle (SDV) architecture, which distributes functionality across multiple high-performance computing (HPC) controllers and implements a service-oriented architecture (SOA) for fault management. The system 100 is designed to ensure functional safety and fault-tolerance, particularly in advanced driving assistance systems (ADAS) and autonomous driving (AD) environments.

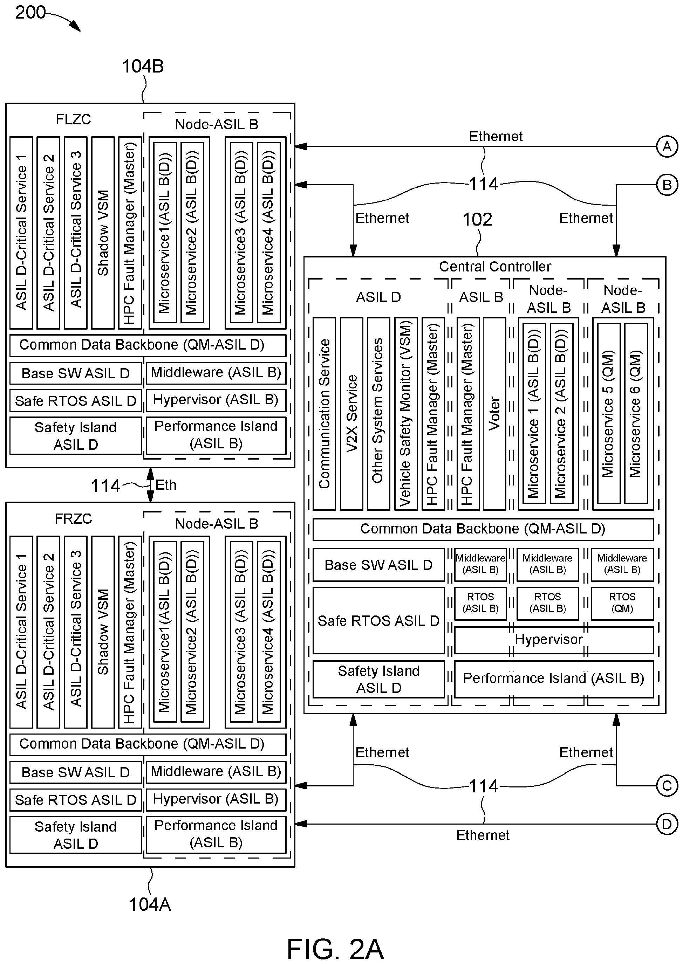

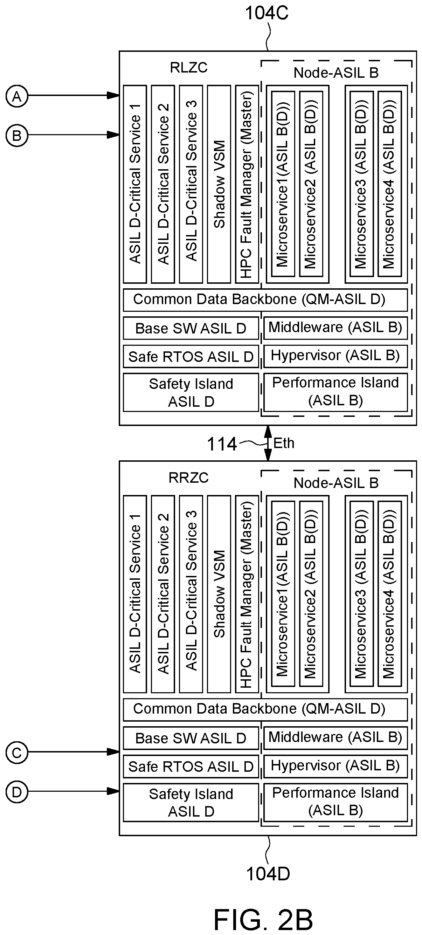

The SDV 101 may have a set of zones. As shown in **FIG. 1****,** the set of zones may include a front left zone, a front right zone, a rear right zone, and a rear left zone. The SDV 101 may include a plurality of controllers (i.e., High-Performing Controllers (HPCs), a microcontroller, a plurality of sets of Primary Sensors (PSs), a plurality of sets of Secondary Sensors (SSs), a plurality of sets of Tertiary Sensors (TSs), a plurality of network bus, and a plurality of power sources. Referring now to **FIG. 2A** and **FIG. 2B****,** a structural diagram 200 of the system 100 including the plurality of controllers of **FIG. 1****,** is illustrated, in accordance with an embodiment of the present disclosure. **FIG. 2A** and **FIG. 2B** are explained in conjunction with **FIG. 1****.** The plurality of controllers (i.e., HPCs) may include a Central Controller (CC) 102 and a plurality of Zonal Controllers (ZCs) 104A-104D. An emergency controller (EC) 106 may be configured as the microcontroller. The EC 106 may be coupled to the CC 102 and with each of the plurality of ZCs 104A-104D.

Each of the plurality of ZCs 104A-104D may be categorized into one of the set of zones. The plurality of ZCs 104A-104D may include a front right zonal controller (FRZC) 104A, a front left zonal controller (FLZC) 104B, a rear left zonal controller (RLZC) 104C, and a rear right zonal controller (RRZC) 104D. The FRZC 104A from the plurality of ZCs 104A-104D may be categorized into the front right zone of the SDV 101. The FLZC 104B from the plurality of ZCs 104A-104D may be categorized into the front left zone of the SDV 101. The RLZC 104C from the plurality of ZCs 104A-104D may be categorized into the rear left zone of the SDV 101. The RRZC 104D from the plurality of ZCs 104A-104D may be categorized into the rear right zone of the SDV 101.

The CC 102 is the primary control unit in the SDV 101. The CC 102 is responsible for monitoring and managing the overall state of the SDV 101. Each of the FRZC 104A, the FLZC 104B, the RLZC 104C, and the RRZC 104D are communicatively coupled with the CC 102 and a set of ZCs from the plurality of ZCs 104A-104D via the primary network bus 114. The EC 106 is communicatively coupled with each of the FRZC 104A, the FLZC 104B, the RLZC 104C, the RRZC 104D and the CC 102 via the secondary network bus 116. The CC 102 monitors an operational state of each of the plurality of ZCs 104A-140D, as well as the EC 106. The EC 106 may be configured to activate when the SDV 101 experiences critical faults that may not be resolved by a respective ZC from the plurality of the ZCs 104A-104D or the CC 102.

By default, the CC 102 is configured as a Vehicle Safety Monitor (VSM) and a voter and one of the plurality of ZCs 104A-104D may be configured as a shadow-VSM (SVSM) configured to monitor an operational state of the CC 102. The VSM may be configured to run critical micro-services, such as the voter that aggregates data from the each of the FRZC 104A, the FLZC 104B, the RLZC 104C, and the RRZC 104D. The VSM may be configured to periodically receive heartbeat signals from each of the plurality of ZCs 104A-104D as well as the EC 106 in order to monitor the plurality of ZCs 104A-104D and the EC 106. The SVSM may be configured to periodically receive heartbeat signals from the VSM (i.e., the CC 102) in order to monitor the VSM.

Referring back to **FIG. 1****,** the plurality of sets of PSs may include a set of front right primary sensors (FRPSs) 108A, a set of front left primary sensors (FLPSs) 108B, a set of rear left primary sensors (RLPSs) 108C, a set of rear right primary sensors (RRPSs) 108D. The plurality of sets of SSs may include a set of front right secondary sensors (FRSSs) 110A, a set of front left secondary sensors (FLSSs) 110B, a set of rear left secondary sensors (RLSSs) 110C, a set of rear right secondary sensors (RRSSs) 110D. The plurality of sets of TSs may include a set of front right tertiary sensors (FRTSs) 112A, a set of front left tertiary sensors (FLTSs) 112B, a set of rear left tertiary sensors (RLTSs) 112C, a set of rear right tertiary sensors (RRTSs) 112D. The plurality of network bus may include a primary network bus 114, and a secondary network bus 116. The plurality of power sources may include a primary power source (not shown) and a secondary power source (not shown).

The set of FRPSs 108A, the set of FRSSs 110A, and the set of FRTSs 112A correspond to the front right zone of the SDV 101. The set of FLPSs 108B, the set of FLSSs 110B, and the set of FLTSs 112B correspond to the front left zone of the SDV 101. The set of RLPSs 108C, the set of RLSSs 110C, and the set of RLTSs 112C correspond to the rear left zone of the SDV 101. The set of RRPSs 108D, the set of RRSSs 110D, and the set of RRTSs 112D correspond to the rear right zone of the SDV 101. Each of the set of FRTSs 112A, the set of FLTSs 112B, the set of RLTSs 112C, and the RRTSs 112D are communicably coupled to the EC 106.

In an embodiment, each of the plurality of ZCs 104A-104D may also serve as a hub for data collection in its respective zone from the set of zones of the SDV 101, and each of the plurality of ZCs 104A-104D processes sensor data of their corresponding zone and transmits the processed sensor data to the CC 102 for further analysis. Each of the set of FRPSs 108A, the set of FLPSs 108B, the set of RLPSs 108C, and the set of RRPSs 108D are coupled to a corresponding ZC of that zone and serve as the main data sources for Advanced Driver Assistance Systems (ADAS) and Autonomous Driving (AD) functionality of the SDV 101. Specifically, the set of FRPSs 108A is communicatively coupled with the FRZC 104A, the set of FLPSs 108B is communicatively coupled with the FLZC 104B, the set of RLPSs 108C is communicatively coupled to the RLZC 104C, and the set of RRPSs 108D is communicatively coupled to the RRZC 104D. In an embodiment, the set of FRPSs 108A, the set of FLPSs 108B, the set of RLPSs 108C, and the set of RRPSs 108D may include, but is not limited to, components like cameras, radar, and lidar systems, etc.

Each of the set of FRSSs 110A, the set of FLSSs 110B, the set of RLSSs 110C, and the set of RRSSs 110D may be utilized to provide hardware redundancy to the SDV 101. Each of the set of SSs 110A-110D is communicatively coupled to a corresponding ZC of another zone as a backup of the plurality of sets of PSs 108A-108D. Specifically, the set of FRSSs 1 10A is connected to the FLZC 104B, the set of FLSSs 110B is connected to the FRZC 104A, the set of RLSSs 110C is connected to the RRZC 104D, and the set of RRSSs 110D is connected to the RLZC 104C. In an embodiment, the set of FRSSs 110A, the set of FLSSs 110B, the set of RLSSs 110C, and the set of RRSSs 110D ensure continuity of service if one of the plurality of set of PSs 108A-108D or their associated ZC from the plurality of ZCs 104A-104D fails due to faults.

Each of the set of FRTSs 112A, the set of FLTSs 112B, the set of RLTSs 112C, and the set of RRTSs 112D provide a final layer of redundancy and are activated only in emergency situations when both the plurality of sets of PSs 108A-108D and the plurality of set of SSs 110A-110D have failed. Each of the set of FRTSs 112A, the set of FLTSs 112B, the set of RLTSs 112C, and the set of RRTSs 112D are communicatively coupled to the EC 106. In an embodiment, the plurality of sets of TSs 112A-112D may include, but are not limited to, proximity sensors and ultrasonic sensors, etc., are used primarily to safely stop the SDV 101.

The primary network bus 114 may be, but is not limited to, an ethernet bus which may utilize, but is not limited to, a Time-Sensitive Networking (TSN) protocol. The primary network bus 114 provides communication channel between the CC 102, the plurality of ZCs 104A-104D, the plurality of sets of PSs 108A-108D, and the plurality of set of SSs 110A-110D. The primary network bus 114 ensures timely and reliable data transmission across the SDV 101 to support both safety and performance functions of the SDV 101. The secondary network bus 116 may be, but is not limited to, a Controller Area Network (CAN) bus and may act as a backup communication channel, particularly between the EC 106 and the CC 102, the plurality of ZCs 104A-104D, the plurality of sets of TSs 112A-112D in the event of the primary network bus 114 failure. The secondary network bus 116 may be configured as the primary network bus in emergency mode when the EC 106 assumes control of the SDV 101.

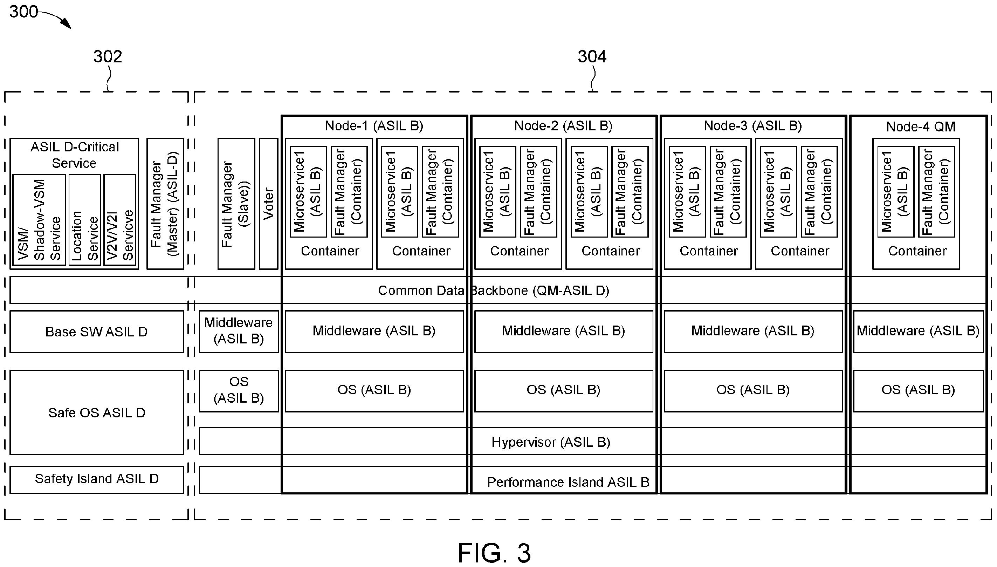

Referring now to **FIG. 3****,** a functional architecture 300 of each of the plurality of controllers of **FIG. 1** is illustrated, in accordance with an exemplary embodiment of the present disclosure. The functional architecture 300 is designed to ensure fault tolerance and support critical functions in SDV101. **FIG. 3** is explained in conjunction with **FIG. 1****,** **FIG. 2A****,** and **FIG. 2B****.** The CC 102 and the plurality of ZCs 104A-104D are all enabled as the plurality of controllers (i.e., HPCs) having the architecture 300. Each controller (i.e., HPC) from the plurality of controllers within the system 100, may have similar functional architecture 300 but functionally play different roles depending on their utilization as the CC 102 or the plurality of ZCs 104A-104D.

As shown in the functional architecture 300, each of the plurality of controllers 102, 104A-104D may include a safety island 302 and a performance island 304, both designed to process different levels of tasks based on their Automotive Safety Integrity Level (ASIL) requirements. The safety island 302 is configurable to perform a plurality of services corresponding to one or more remaining ASILs from a plurality of ASILs. The safety island 302 is dedicated to executing critical services with the highest ASIL rating (i.e., ASIL C and ASIL D). In an example, the safety island 302 is intended to handle tasks where any failure could lead to life-threatening situations. The Safe OS (Operating System) on the safety island 302 ensures compliance with ASIL D standards. In an embodiment, the plurality of services may include, but not limited to, a plurality of critical services such as the Vehicle Safety Monitor (VSM) or the Shadow-VSM (SVSM) services, Location Services, Vehicle-to-Vehicle (V2V) services, and Vehicle-to-Infrastructure (V2I) services, and a set of sensor services.

In case of emergency, the critical services running on the safety island 302 may help the SDV 101 to communicate a real-time location, fault types, and other crucial data of the SDV 101 to Original Equipment Manufacturer (OEM) service stations, nearby vehicles, and road infrastructure via the V2V/V2I communications systems. The VSM or the SVSM services running on the CC 102 and/or on the plurality of ZCs 104A-104D to monitor the safety of the SDV 101. Additionally, master fault manager is located within the safety island 302 of the plurality of controllers to detect fault at the highest level (i.e., ASILC and ASIL D), which covers critical faults in the entire controller (i.e., HPC), including ASIL C-rated services and ASIL D-rated services.

The performance island 304 is configurable to perform a plurality of micro-services corresponding to one or more remaining ASILs from the plurality of ASILs. In an embodiment, the one or more ASILs corresponding to which the plurality of services may be performed by the safety island 302 are of higher priority than the one or more remaining ASILs corresponding to which the plurality of micro-services are performed by the performance island 304. The performance island 304 operates lower-rated ASIL tasks (ASIL B or below), including safety tasks at decomposed levels (QM, ASIL A, B, etc.). The performance island 304 is equipped with a Hypervisor (ASIL B), which is responsible for creating virtual environments in which multiple Operating System (OS) instances (e.g., Android, QNX) may operate independently. The performance island 304 may include one or more nodes (i.e., Node-1, Node-2, etc. as shown in **FIG. 3**). Each OS instance corresponds to a Node (i.e., Node-1, Node-2, etc.) and may include one or more containers to perform one or more of the plurality of micro-services micro-service (in this case, micro-services of ASIL B ratings). The plurality of micro-services may include a data acquisition service, a perception service, and a decision-making service. The one or more containers ensure the separation of tasks based on their safety levels, avoiding interference between critical and non-critical tasks. A Common Data Backbone (CDB) facilitates communication between different nodes on the performance island 304. The CDB acts as a shared interface through which the one or more micro-services from the one or more containers (i.e., Micro-service 1, Micro-service 2 as shown in **FIG. 3**) interact with one another and process sensor data from the plurality of sets of sensors 108A-D, 110A-D, 112A-D, actuators, and the plurality of controllers 102, 104A-D.

The plurality of micro-services may be software units deployed within the one or more containers within the performance island 304. Micro-service 1 in each node might be the data-acquisition service and may handle data acquisition from the plurality of sets of sensors 108A-D, 110A-D, 112A-D such as cameras, LiDAR, RADAR, etc. Micro-service 2 might be the perception service and may focus on processing the sensor data to perform tasks like object detection, classification, and decision-making, as required by the ADAS. To ensure the safety and integrity of vehicle operations, it is critical to maintain Freedom from Interference (FFI) between the plurality of micro-services of different ASILs. This is achieved by grouping micro-services with the same ASIL ratings and deploying them within the one or more containers of a particular node of the performance island 304 of a controller (i.e., HPC) from the plurality of controllers 102, 104A-D. For instance, all micro-services rated ASIL B may be grouped together and deployed in separate containers within a node that is equipped with an ASIL B-rated Operating System (OS) and middleware. This deployment ensures that micro-services with different safety levels do not interfere with each other, promoting a high degree of functional safety.

Each node within the controller runs these containers in parallel, with different nodes (Node 1, Node 2, Node 3, etc.) handling the same ASIL group to provide redundancy and ensure system reliability. **FIG. 3** illustrates how this isolation of micro-services is managed across the nodes, where, for example, ASIL B-rated micro-services are consistently grouped together within containers of ASIL B-rated nodes.

The SDV 101 features, especially those with functional safety requirements up to ASIL D, are primarily executed by processing data gathered from various vehicle sensors. These features are decomposed into three micro-services running on the performance island 304 of each of the plurality of ZCs 104A-104D, each of which is assigned to corresponding software services (micro-services) that are deployed in the one or more containers of each of the plurality of controllers 102, 104A-104D. These micro-services may include, but are not limited to, the data acquisition service, the perception service, and the decision-making service. The data acquisition service involves gathering data from the environment of the SDV 101 through the plurality of sets of sensors 108A-D, 110A-D, 112A-D, including cameras, LiDAR, radar, steering angle sensors, external temperature sensors, etc. Micro-services in the plurality of Zonal Controllers (ZCs) 104A-104D from the plurality of controllers 102, 104A-104D are responsible for acquiring the sensor data. For example, Micro-service 1 in the FRZC 104A collects data from both corresponding set of PSs (such as the set of FRPSs 108A and corresponding set of SSs (such as the set of FLSSs 110B). This distributed data acquisition process allows the SDV 101 to perceive its surroundings accurately.

Once the sensor data from the from the plurality of sets of sensors 108A-D, 110A-D, 112A-D is acquired, the sensor data needs to be processed to interpret the environment. The Perception service is responsible for analyzing and processing the sensor data according to the specific requirements of the SDV 101. For instance, in Advanced Driver Assistance Systems (ADAS), this includes detecting and classifying objects such as other vehicles, pedestrians, and obstacles. These ADAS operations may be handled by Micro-service 2, which runs on a corresponding node of the controller. This perception service ensures that understanding of the SDV environment is accurate and up to date to enable safe decision-making.

After processing the sensor data, the SDV 101 must decide on the appropriate course of action based on results of the perception service. The decision-making service interprets the processed data and initiates necessary actions through actuators of the SDV 101. The actuators may include tasks like Adaptive Cruise Control (ACC), Lane Keep Assist (LKA), or other advanced driving features. Micro-service 3 on the corresponding controller may be responsible for making these decisions and executing them to ensure the SDV 101 reacts to its environment in real-time, promoting safety and functionality.

While the Data Acquisition service is generally executed at each of the plurality of ZCs 104A-104D connected to a set of PSs (e.g., a set of Front Left Primary Camera (FLPC) as the set of FLPSs 108B connected to the FLZC 104B), the perception service and the Decision-Making service require a higher level of fault tolerance. To achieve the fault tolerance, these plurality of micro-services may be executed redundantly across the set of controllers (i.e., at least two additional controllers. This redundancy ensures that in the event of a fault in one controller from the plurality of controllers, one of remaining of the plurality of controllers may continue processing the necessary micro-services without interruption. For instance, while the FLPC service runs on the FLZC 104B, the service for the Front Left Secondary Camera (FLSC) may be executed on the FRZC 104A, thereby ensuring that the data acquisition service, the perception service, and the decision-making service are not reliant on a single controller. This approach of distributing micro-services across multiple controllers ensures both redundancy and load balancing, which further enhances the fault tolerance and overall safety of the SDV 101.

The placement of micro-services within a controller from the plurality of controllers 102, 104A-D, as shown in the functional architecture 300 of each of the plurality of controllers 102, 104A-D may be based on their location and function within the SDV 101. For example, vehicle features related to lane change detection and proximity detection, which are critical for front-facing ADAS functionalities, have multiple micro-services running on the FLZC 104B and the FRZC 104A. Conversely, the remaining of the plurality of ZCs, i.e., the RLZC 104C and the RRZC 104D, may handle fewer micro-services for these features but are still essential for rear-facing functionalities such as backup cameras and rear collision detection. The distribution of micro-services based on vehicle positioning ensures that each zone of the SDV 101 has the computational resources needed to execute the associated safety-critical functions efficiently.

One of the plurality of controllers 102, 104A-104D may be dynamically configurable as the Vehicle Safety Monitor (VSM) and a voter based on a predefined priority order. The VSM may be configured to dynamically select a set of controllers from remaining of the plurality of controllers based on determination of one of a plurality of modes of the SDV 101. The set of controllers may be configured to simultaneously perform at least one of the plurality of micro-services. It is to be noted that the plurality of micro-services may redundantly be processed by the set of controllers (e.g., here three controllers). The performance island 304 of the one of the plurality of controllers 102, 104A-104D may be configured to implement the voter. The voter may be configured to compare outputs of the at least one of the plurality of micro-services simultaneously performed by each of the set of controllers. The voter may compare outputs from the three controllers to ensure their consistency. The SDV 101 may be determined to be in a normal mode as the one of the plurality of modes in case the outputs from each of the set of controllers are about same. In an embodiment, if all three outputs match, the SDV 101 proceeds as in the normal mode. The SDV 101 may be determined to be in a degraded mode as the one of the plurality of modes in case output of one of the set of controllers may not be about same with the outputs of rest of the set of controllers. In the degraded mode, in case one of the set of remaining of the plurality of controllers may be determined as faulty, the VSM may configured to dynamically select one of the rest of the remaining of the plurality of controllers to replace the faulty controller in the set of controllers. The SDV 101 may be determined to be in an emergency mode as the one of the plurality of modes in case each of the outputs of the set of controllers are not about same. In the event of discrepancies, the voter may flag potential faults and triggers appropriate fault recovery processes by interacting with a slave fault manager on the performance island 304.

The safety island 302 of each of the plurality of controllers may include a master fault manager. The performance island 304 of each of the plurality of controllers may include a slave fault manager communicatively coupled to the master fault manager. At the most granular level, each container within a controller (i.e., HPC) from the plurality of controllers, which houses micro-services or applications, may include a container fault manager. The container fault manager may be configured to monitor a first operability status of each of the one or more of the plurality of micro-services based on a set of Key Performance Indicators (KPIs). In an embodiment, the set of KPIs may include, but are not limited to, periodicity of the micro-service execution, duration of the micro-service execution, functional checkpoints and step-sequence of the micro-service execution. In an embodiment, the container fault manager is responsible for detecting faults at the micro-service/application level. These faults may originate from issues such as micro-service misbehavior, failure in communication, or a sensor malfunction (both primary and secondary sensors). The container fault manager constantly monitors the health of micro-services and raises alerts when faults are detected. The container fault manager of each container within the controller is communicatively coupled to the slave fault manager of that controller. The container fault manager of each container within the controller may be further configured to transmit the first operability status to the slave fault manager based on the monitoring of the first operability status.

The second level of fault management is performed by the slave fault manager inside the performance island 304 of each of the plurality of controllers (as shown in the functional architecture 300), which is responsible for supervising the controller itself. The slave fault manager operates on the performance island 304 of the controller (as shown in the functional architecture 300). The slave fault manager may be configured to monitor a second operability status of the performance island 304 based on a first set of tests (e.g., Built-in-Self-Tests) performed by the slave fault manager at predefined instances and the reception of the first operability status. The slave fault manager may further transmit the second operability status to the master fault manager based on the monitoring of the second operability status. In an embodiment, the supervising of the controller may include monitoring critical components such as the performance island 304, hypervisor, and Operating System (OS) of the architecture 300. If fault is detected in any of these areas, the corresponding slave fault manager reports them to the master fault manager of that controller. The corresponding slave fault manager also oversees the health of the HPC node. The slave fault manager may also be configured to relaunch the corresponding container a predefined number of times in case the first operability status may be determined as faulty.

At the highest level, the master fault manager supervises the safety island 302 of each of the plurality of controllers 102, 104A-104D. The master fault manager runs on the safety island 302 as shown in the functional architecture 300 of each of the plurality of controllers 102, 104A-104D. The master fault manager may be configured to monitor a third operability status of the safety island 302 based on a second set of tests (e.g., Built-in-Self- Tests and runtime tests) performed by the master fault manager at the predefined instances and the reception of the second operability status. The master fault manager may further be configured to transmit the third operability status to the VSM based on the monitoring of the third operability status. The master fault manager may also be configured to relaunch the corresponding controller from the plurality of controllers 102, 104A-104D in case the second operability status is determined as faulty. In an embodiment, the master fault manager is responsible for monitoring safety-critical components such as the safety island 302, ASIL D-rated services, and the voter, which ensures consistency and correctness in decision-making across the SDV 101. The master fault manager also collects information from the slave fault manager (i.e., second operability status) to detect system-wide failures and ensure that safety protocols are followed in the event of a failure. When a fault is detected at the micro-service level, the corresponding container fault manager notifies the slave fault manager, which further escalates the fault to the master fault manager for system-wide analysis and fault-handling strategies. The slave fault manager also independently checks the overall health of the HPC node, hypervisor, and other platform-level components of the functional architecture 300 to alert the master fault manager of any faults in those areas. In case the one of the plurality of controllers may be determined as faulty based on the third operability status, one of the remaining of the plurality of controllers may be configured as the VSM and the voter based on the predefined priority order. In case one of the set of controllers may be determined as faulty based on the third operability status, the VSM may be configured to dynamically update the set of controllers from rest of remaining of the plurality of controller 102, 104A-104D based on the determination of one of the plurality of modes.

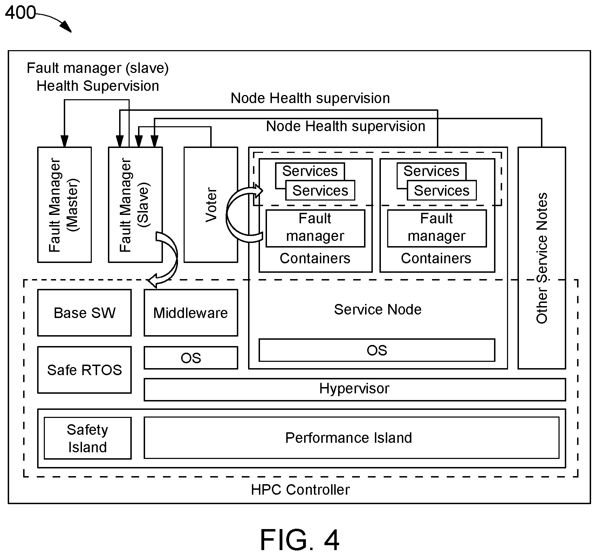

Referring now to **FIG. 4****,** fault monitoring is depicted in each of the plurality of controllers 102, 104A-104D of **FIG. 3****,** in accordance with an embodiment of the present disclosure. The functional diagram 300 depicts how fault management is performed across multiple levels of each of the plurality of controllers 102, 104A-104D to ensure system integrity, real-time functionality, and compliance with functional safety standards, specifically Automotive Safety Integrity Levels (ASILs). The functional diagram 300 shows three distinct layers of fault managers that includes the container fault manager, the slave fault manager, and the master fault manager working together to monitor and maintain health of the controller.

At the base of this functional diagram 300, the container fault manager is responsible for monitoring the one or more containers within a controller. Each container performs the plurality of micro-services that are associated with specific vehicle functions (e.g., the data acquisition service, the perception service, and the decision-making service, etc.). The container fault manager of each container may be configured to monitor the first operability status of each of the one or more of the plurality of micro-services based on the set of KPIs. The container fault manager of each container may also be configured to transmit the first operability status to the slave fault manager based on the monitoring of the first operability status. In an embodiment, the container fault manager may monitor health of the plurality of micro-services, detect faults at the application (i.e., micro-services) level, and reports these faults upwards to the slave fault manager. The monitoring by the container fault manager may include alive supervision, deadlock supervision (temporal flow monitoring), logical supervision (program flow monitoring), and health status supervision. In the alive supervision, the container fault manager may ensure all of the plurality of micro-services may execute their tasks at the predefined periodic intervals. In the deadlock supervision, the container fault manager may verify that operations within the plurality of micro-services may be completed in the predefined time to avoid stalling. In the logical supervision, the container fault manager may ensure that operations follow the correct logical sequence to avoid unexpected behavior. In the health status supervision, the container fault manager may monitor the health of the plurality of micro-services, including parameters like Operating System (OS) state, input voltage, and more. The container fault manager of each container within the controller is communicatively coupled to the slave fault manager of that controller. The container fault manager of each container within the controller may be further configured to transmit the first operability status to the slave fault manager based on the monitoring of the first operability status.

At controller (i.e., controller platform) level of the functional architecture 300, the slave fault manager is responsible for monitoring key infrastructure components of the functional architecture 300 of each of the plurality of controllers 102, 104A-104D, such as the performance island 304, the hypervisor, and the Operating System (OS). The slave fault manager may be configured to monitor a second operability status of the performance island 304 based on the first set of tests (e.g., Built-in-Self-Tests) performed by the slave fault manager at predefined instances and the reception of the first operability status. The slave fault manager may further be configured to transmit the second operability status to the master fault manager based on the monitoring of the second operability status. The slave fault manager may also receive the first operability status from the container fault manager of each containers of the corresponding controller from the plurality of controllers 102, 104A-104D. Accordingly, the slave fault manager may also be configured to relaunch the corresponding container a predefined number of times in case the first operability status may be determined as faulty. In an embodiment, the slave fault manager may ensure the overall health of the HPC node (where container resides) and provides alive supervision, deadlock supervision, and health status supervision. In alive supervision, the slave fault manager oversees the periodic operations of the controller (at the controller platform level). In deadlock supervision, the slave fault manager may detect and address any platform-level timing issues. In health status supervision, the slave fault manager may continuously monitor the health of the HPC node including its hypervisor, OS, hardware temperature, and other critical parameters. When a fault is detected, the slave fault manager reports the fault to the master fault manager.

At the highest level, the master fault manager runs on the safety island 302 of the HPC and supervises the entire controller from the plurality of controllers (i.e., HPC) 102, 104A-104D to ensure safety-critical elements such as ASIL D-rated services, the voter, and the overall system integrity. The master fault manager may be configured to monitor a third operability status of the safety island 302 based on the second set of tests (e.g., Built-in-Self-Tests and runtime tests) performed by the master fault manager at the predefined instances and the reception of the second operability status. The master fault manager may further be configured to transmit the third operability status to the VSM based on the monitoring of the third operability status. The master fault manager may also receive fault notifications from the slave fault manager and configured to relaunch the corresponding controller from the plurality of controllers 102, 104A-104D in case the second operability status is determined as faulty. The master fault manager monitors health supervision at the system level (the safety island 302, the voter, etc.). The master fault manager ensures temporal and logical consistency across the entire controller from the plurality of controllers 102, 104A-104D. In case the one of the plurality of controllers may be determined as faulty based on the third operability status, one of the remaining of the plurality of controllers may be configured as the VSM and the voter based on the predefined priority order. In case one of the set of controllers may be determined as faulty based on the third operability status, the VSM may be configured to dynamically update the set of controllers from rest of remaining of the plurality of controller 102, 104A-104D based on the determination of one of the plurality of modes.

Referring back to **FIG. 1****,** the system 100 is responsible for managing vehicle-level faults through various components and control mechanisms to ensure the SDV 101 operates safely across different fault scenarios. The SDV 101 may incorporate a hierarchical structure that may include the plurality of controllers 102, 104A-104D (i.e., HPCs), the microcontroller 106, the plurality of sets of PSs 108A-108D, the plurality of sets of SSs 110A-110D, the plurality of sets of TSs 112A-112D, the plurality of network bus, and the plurality of power sources. The plurality of controllers (i.e., HPCs) may include the CC 102, the plurality of ZCs 104A-104D. The EC 106 may be configured as the microcontroller. The plurality of ZCs 104A-104D may include the FRZC 104A, the FLZC 104B, the RLZC 104C, the RRZC 104D. Each of the plurality of ZCs 104A-104D periodically transmits a heartbeat signal to the VSM that is by default configured to run on the CC 102. The VSM monitors health of each of the plurality of ZCs 104A-104D by receiving heartbeat signals from each of the plurality of ZCs 104A-104D at regular time intervals. In turn, the CC 102 also transmits its own heartbeat signal to a SVSM running on a dynamically configured ZC from the plurality of ZCs. This redundancy ensures that if either one of the plurality of ZCs 104A-104D or the CC 106 fails to send a heartbeat signal to the VSM or the SVSM respectively, the VSM or the SVSM detects the failure in the one of the plurality of ZCs 104A-104D or the CC 106 promptly.

If the one of the plurality of ZCs 104A-104D fails to transmit the heartbeat signal, the VSM initiates a transition of one of the plurality of modes of the SDV 101 from the normal mode to the fault-operational mode to keep the SDV 101 operational while recovering from the failure. In the event that the VSM detects failures from more than one ZC from the plurality of ZCs 104A-104D, the VSM first checks if all the ZCs corresponding to one zone from the set of zone are detected as faulty. If this is the case, the VSM immediately transitions the SDV 101 to the emergency mode to ensure safety. However, if the failures occur across different zones, the VSM transitions the SDV 101 to the degraded mode which allows for partial functionality of the SDV 101. If another ZC failure occurs while the SDV 101 is in the degraded mode, the VSM escalates the SDV 101 to the emergency mode. Additionally, the EC 106 of the SDV 101 also transmits its health status to the VSM by default configured on the CC 102 through regular heartbeat signals. A failure in the EC 106 may be detected when the heartbeat signals from the EC 106 is not received by the VSM. The VSM may assume the responsibility of the EC 106 and transitions the SDV 101 directly to the emergency mode. In this emergency mode, the VSM triggers a Safe Stop Planner (SSP) micro-service to ensure the SDV 101 halts safely.

As illustrated in **FIG. 1****,** the SDV 101 may include the plurality of sets of PSs 108A-108D, the plurality of sets of SSs 110A-110D, and the plurality of sets of TSs 112A-112D distributed across each of the set of zones of the SDV 101. The plurality of sets of PSs 108A-108D may include the set of FRPSs 108A, the set of FLPSs 108B, the set of RLPSs 108C, and the set of RRPSs 108D. The plurality of sets of SSs 110A-110D may include the set of FRSSs 110A, the set of FLSSs 110B, the set of RLSSs 110C, and the set of RRSSs 110D. The plurality of sets of PSs 108A-108D and the plurality of sets of SSs 110A-110D may provide critical data for vehicle navigation and operation. The plurality of ZCs 104A-104D contains a data acquisition micro-service, which performs plausibility tests on the raw sensor data received from the plurality of sets of PSs 108A-108D. If the plausibility test identifies any fault in the sensor data in one of the plurality of sets of PSs 108A-108D, the master fault manager of one of the plurality of ZCs 104A-104D of that zone notifies the VSM about the sensor failure.

Upon receiving the notification of a fault in a set of PSs from the plurality of sets of PSs 108A-108D, corresponding to a particular zone of the SDV 101, the VSM assesses the overall vehicle status and attempts to activate the plurality of sets of SSs 110A-110D of the SDV 101 as a backup. The VSM checks whether the plurality of sets of SSs 110A-110D are available. In cases where the secondary sensors are absent or have also failed, the VSM may trigger a transition to move the SDV 101 to the emergency mode, the VSM halts non-critical operations and prioritizes safety of the SDV 101 by initiating necessary actions through the SSP micro-service to safely stop the SDV 101. Additionally, if one of the plurality of ZCs 104A-104D corresponding to one of the set of zones fails, one of remaining ZCs from the plurality of ZCs 104A-104D of another zone may take charge of the failed ZC. For instance, if the FLZC 104B fails, the FRZC 104A may assume responsibility by activating a secondary sensor in the front-left zone, such as the FLSS 110B. The FRZC 104A may then take over the tasks previously performed by the FLZC 104B to ensure continuous monitoring and control over the front-left zone. This reallocation of control is based on a predefined priority order to ensure that the SDV 101 remains operational and maintains critical functionality while the VSM manages the fault recovery process.

As illustrated in **FIG. 1****,** the SDV 101 may include the plurality of network bus. The plurality of network bus may include the primary network bus 114 and the secondary network bus 116. The plurality of network bus in the SDV 101 may utilize, but is not limited to, the Time-Sensitive Networking (TSN) protocol, which provides redundancy and fault tolerance at the software level for communication between the plurality of ZCs 104A-104D and the EC 106 with their connected plurality of sets of sensors 108A-108D, 110A-110D, 112A-112D. The VSM continuously monitors the health of the primary network bus 114 based on, but is not limited to, the Time-Sensitive Networking (TSN) protocol. If a fault is detected in the primary network bus 114, indicating a loss of communication between the controllers or sensors, the VSM transitions the SDV 101 to the emergency mode. This action prevents further vehicle operation until the fault is resolved, as a functional network bus is critical for real-time sensor data acquisition and controller communication. The SDV 101 may also include the plurality of power sources. The plurality of power source may include the primary power source and the secondary power source. The primary power source of the SDV 101 is monitored by a switch that may detect any anomalies or failures in the power system. Upon detection of a power source failure, the switch alerts the VSM, which then moves the SDV 101 to the degraded mode. In degraded mode, the SDV 101 operates with reduced capabilities to conserve power while ensuring the safety of its occupants. The VSM may also prioritize essential systems and shut down non-essential services to extend vehicle functionality until the SSP micro-service is executed or the fault is resolved.

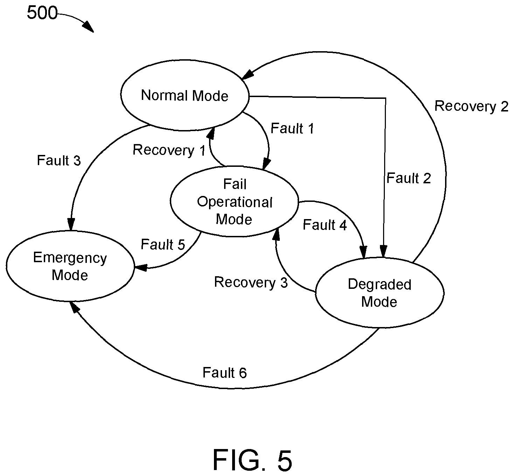

Referring now to **FIG. 5****,** a state diagram 500 depicting transition of operation modes of the SDV 101, is illustrated, in accordance with an exemplary embodiment of the present disclosure. The VSM manages the safety state of the overall SDV 101 by orchestration transitions between the plurality of modes of the SDV 101. The plurality of modes may include, but is not limited to, the normal mode, the fault-operational mode, the degraded mode, and the emergency mode. Each mode transition is based on specific fault detection conditions to ensure that the SDV 101 operates safely, even when failures occur within critical systems such as controllers, sensors, power system, or network bus.

The transitions between the plurality of modes of the SDV 101 are dictated by fault severity and system status, with recovery paths available depending on fault resolution. The plurality of modes of the SDV 101 are ordered from critical to most critical modes such as the normal mode, the fault-operational mode, the degraded mode, and the emergency mode. The VSM dynamically monitors the system 100 for faults and triggers mode transitions as required. In the normal mode, the SDV 101 operates with full functionality after successfully passing Built-in-Self-Tests (BISTs) or startup tests. The SDV 101 may be determined to be in the normal mode as the one of the plurality of modes in case the outputs from each of the set of controllers are about same. The SDV 101 remains in this mode unless a fault is detected in real-time operations. All vehicle components, including the plurality of controllers (i.e., HPCs), the plurality of sets of sensors 108A-108D, 110A-110D, 112A-112D, the plurality of network buses, and the plurality of power sources, are fully operational, and the VSM continuously monitors the health of these components. The VSM by default operates on the CC 102, gathering system status and detecting faults to ensure ongoing normal operation. If any fault is detected, the SDV 101 transitions to an appropriate fallback mode as defined by the fault type. When a fault is identified, the SDV 101 transitions from the normal mode to the fault-operational mode. Faults that lead to transition (i.e., Fault 1) include the failure of one of the plurality of ZCs 104A-104D or the failure of a set of PSs from the plurality of sets of PSs 108A-108D or a set of SSs from the plurality of sets of SSs 110A-110D. In the fault-operational mode, the SDV 101 continues to operate with all functionalities active, although the user is notified of the fault through display or audio notifications. The VSM monitors the system 100 for potential recovery, and if the fault is resolved, the VSM transitions the SDV 101 back to the normal mode via recovery 1 as shown in **FIG. 5****,** which typically involves restarting the one of the plurality of ZCs 104A-104D.

The VSM transitions the SDV 101 to the degraded mode when multiple faults occur, or when a more severe fault compromises critical systems (i.e., Fault 2). This mode limits functionality of the SDV 101 to essential operations only. Examples include the failure of one ZC corresponding to each of the set of zone as faulty, a mismatch of one controller output at the voter, or a failure of the primary power source. The SDV 101 may be determined to be in the degraded mode as the one of the plurality of modes in case output of one of the set of controllers may not be about same with the outputs of rest of the set of controllers. In the degraded mode, in case one of the set of remaining of the plurality of controllers may be determined as faulty, the VSM may configured to dynamically select one of the rest of the remaining of the plurality of controllers to replace the faulty controller in the set of controllers. In the degraded mode, the maximum speed of the SDV 101 may be limited, and non-critical systems such as in-vehicle infotainment (IVI) and rear-seat entertainment (RSE) are disabled. The user receives fault notifications, and depending on the outcome of system checks, the SDV 101 may either return to the fault-operational mode (via Recovery 3) or, if all faults are resolved, to the normal mode (via Recovery 2).

Emergency mode is the most critical safety state and is triggered when severe system failures occur, such as the failure of three or more HPCs, the failure of both the sets of PSs and the sets of SSs of a particular ZC 104A-104D, or the failure of the EC 106 (i.e., Fault 3). The SDV 101 may be determined to be in an emergency mode as the one of the plurality of modes in case each of the outputs of the set of controllers are not about same. In this mode, only essential vehicle functionalities required for a safe stop are operational. The VSM communicates with the EC 106 via the secondary network bus 116 to execute the SSP micro-service, which safely brings the SDV 101 to a halt using the plurality of sets of TSs 112A-112D (e.g., proximity sensors). The emergency mode is irreversible, and once the SDV 101 enters this state, the SDV 101 cannot revert to the degraded mode, or the fault-operational mode, or the normal mode, the SDV 101 may only come out of emergency mode after a successful restart.

The transitions between modes are governed by specific conditions based on the type and severity of the fault detected. Fault 1 triggers a transition of the SDV 101 from the normal mode to the fault-operational mode when a failure in one of the plurality of ZCs 104A-104D is detected, such as a missing heartbeat, or when a failure occurs in either the primary or secondary sensor. Fault 2 causes the SDV 101 to move from the normal mode to the degraded mode if one ZC corresponding to each of the set of zone as faulty, or if there is a failure in the primary power source or a mismatch of controller (i.e., HPC) output at the voter. In more critical situations, Fault 3 triggers a transition of the SDV 101 from the normal mode to the emergency mode. This occurs when three or more HPCs fail, when both the plurality of sets of PSs 108A-108D and the plurality of sets of SSs 110A-110D in a corresponding zone fail, when two ZCs 104A-104D fail within the same zone, or if a network bus fails.

The transition from the fault-operational mode to more critical modes also depend on fault detection. Detection of Fault 4 results in a shift from the fault-operational mode to the degraded mode when an additional HPC from a different zone fails, the primary power source fails, or an HPC output mismatch is detected at the voter. If further critical faults are identified, such as additional HPC failures within the same zone or the failure of the EC 106, Fault 5 triggers a transition of the SDV 101 from the fault-operational mode directly to the emergency mode. Lastly, Fault 6 triggers a transition of the SDV 101 from the degraded mode to the emergency mode. This occurs if another ZC fails, the EC 106 fails, or if both primary 108A-108D and secondary sensors 110A-110D of a ZC 104A-104D fail.

Recovery paths are provided based on the resolution of faults. Recovery 1 allows the SDV 101 to return from the fault-operational mode to the normal mode if the fault in one HPC is resolved by restarting the HPC. Recovery 2 facilitates the return from the degraded mode to the normal mode if the faults in both failed HPCs are resolved. Recovery 3 enables the SDV 101 to transition from the degraded mode back to the fault-operational mode if one of the failed HPCs is successfully restarted. These recovery mechanisms ensure that the SDV 101 may revert to safer operational modes when faults are addressed.

Referring back to **FIG. 1****,** a mechanism for implementing fault tolerance at the SDV 101 is described to ensure that the SDV 101 remains operational even in the event of fault detection. The mechanism is designed to mitigate single points of failure within the plurality of ZCs 104A-104D through the use of the predefined priority order, which governs the assignment of the VSM and the SVSM roles to active one of remaining ZCs from the plurality of ZCs 104A-104D. This redundancy mechanism allows the system 100 to quickly respond to failures and continue functioning safely.

In normal operation, the VSM runs on the CC 102, which is responsible for monitoring the plurality of ZCs 104A-104D across the SDV 101. Simultaneously, one of the plurality of ZCs 104A-104D is configured as the SVSM that runs in the background and monitors the health of the CC 102. For instance, the FLZC 104B can be assigned as the SVSM that may continuously check status of the CC 102 by monitoring heartbeat signals and communications from the CC 102. If the CC 102 fails to communicate with the FLZC 104B or the heartbeats of the CC 102 are lost, the FLZC 104B may assume the role of the VSM. Upon assuming the role of the VSM, the FLZC 104B may notify remaining ZCs of the plurality of ZCs 104A-104D to redirect their communications, including the periodic transmission of the heartbeat signals, to the FLZC 104B configured as the VSM instead of the CC 102. At this point, the FLZC 104B configured as the VSM triggers a transition of the SDV 101 from the normal mode to the degraded mode of operation to maintain functionality of the SDV 101 while accounting for the fault in the CC 102.

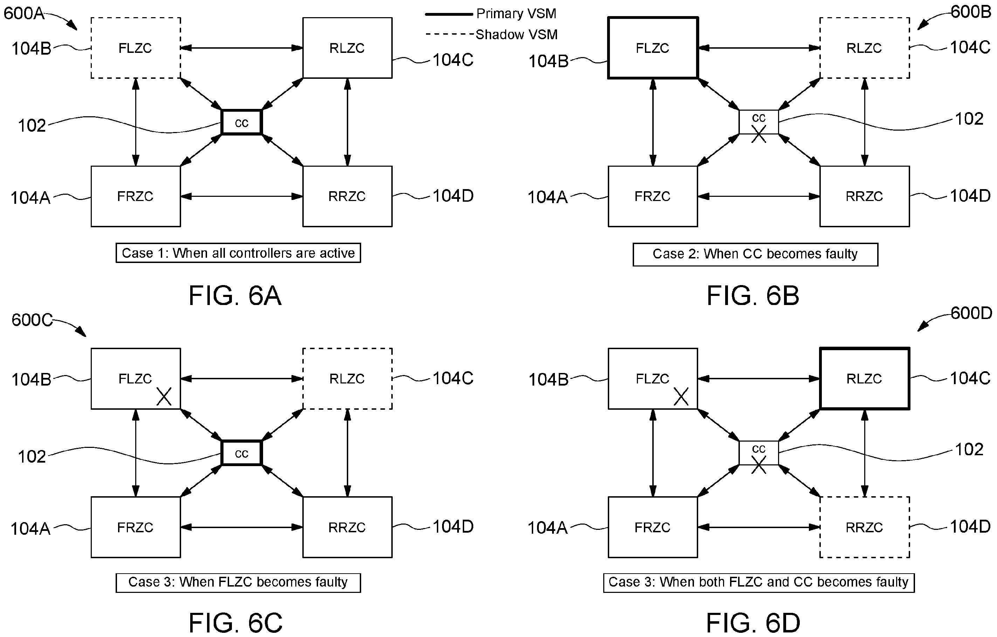

The predefined priority order also allows flexibility in determining which HPC of the plurality of ZCs 104A-104D or EC 106 should take over as VSM and SVSM when a fault in one of the plurality of ZCs 104A-104D occurs. An Original Equipment Manufacturer (OEM) can define a specific priority order for selecting one of remaining ZCs of the plurality of ZCs to act as the VSM or perform other critical roles if the SDV 101 is no longer operating in the normal mode due to an HPC failure. In the event of such a failure, the one of the remaining HPCs, as per the predefined priority order, may assume the responsibilities of the failed HPC and continue tasks such as fault monitoring, heartbeat signals exchange, and system control, etc. The dynamic priority assignment of roles ensures that the SDV 101 may remain operational despite faults in key computing units. The predefined priority order may vary from OEM to OEM, based on vehicle specifications. In an exemplary embodiment, in one configuration of the predefined priority order, the following priority order is used by the OEM, the FLZC 104B has priority 1, the RLZC 104C has priority 2, the RRZC 104D has priority 3, and the FRZC 104A has priority 4, as will be explained in greater detail below in **FIG 6A, FIG. 6B, FIG. 6C** and **FIG. 6D****.**

Referring now to **FIG. 6A, FIG. 6B, FIG. 6C** and **FIG. 6D** architectural flow diagrams depicting fault tolerance mechanism for handling failures in the plurality of controllers is illustrated, in accordance with the exemplary embodiment of the present disclosure. **FIG. 6A, FIG. 6B, FIG. 6C** and **FIG. 6D** depict four cases of controller failure scenarios and how the system 100 reassigns the role of the VSM and the SVSM based on the predefined priority order.

**FIG. 6A** depicts the plurality of ZCs 104A-104D communicably coupled to the CC 106 and with nearest two ZC from the plurality of ZCs 104A-104D of the SDV 101. Each of the plurality of ZCs 104A-104D are responsible for data acquisition from components at each of the set of zones of the SDV 101. The plurality of ZCs 104A-104D may include the FRZC 104A, the FLZC 104B, the RLZC 104C and the RRZC 104D. The CC 102 is typically responsible for overseeing the entire system 100 and configured as the VSM in normal operating mode. To ensure redundancy and fault tolerance, one of the plurality of ZCs 104A-104D is always configured as the SVSM for monitoring the CC 102 or the VSM. The SVSM is dynamically selected based on the predefined priority order that can vary depending on the Original Equipment Manufacturer (OEM) specifications. In this exemplary embodiment, the one more ZC failure is not determined as faulty and may assign priority order to each of the plurality of ZCs 104A-104D as the FLZC 104B has priority 1, the RLZC 104C has priority 2, and the RRZC 104D has priority 3, the FRZC 104A has priority 4.

In flow diagram 600A depicted in **FIG. 6A****,** when all HPCs are active, the CC 102 configured as the VSM, and the FLZC 104B configured as the SVSM because the FLZC 104B has the priority 1. The FLZC 104B monitors the health of the CC 102 by checking the heartbeat signals received from the CC 102. The plurality of ZCs 104A-104D are fully operational and communicate regularly with the CC 102. The SDV 101 remains in the normal operational mode as long as there are no detected faults in any of the plurality of HPCs. In general, the SDV 101 operates according to the first case after passing the checkups at startup.

**In** flow diagram 600B depicted in **FIG. 6B****,** when the CC 102 becomes faulty as indicated by the "X" over the CC 102, the SVSM on the FLZC 104B dynamically configures the FLZC 104B from the SVSM to the VSM. The FLZC 104B takes over the role of monitoring and managing communications with remaining of the plurality of ZCs 104A, 104C, 104D. Since the SVSM has detected the failure of the CC 102, the FLZC 104B now configured as the VSM transitions the SDV 101 to the degraded mode, and the remaining of the plurality of ZCs 104A, 104C, 104D begin sending the heartbeat signals and their data to the FLZC 104B instead of the CC 102. Additionally, based on the predefined priority order, one of remaining ZCs from the plurality of ZCs 104A-104D (in this case, the RLZC 104C having the priority 2) may be dynamically configured as the SVSM and the FLZC 104B may be dynamically configured as the VSM begins sending the heartbeat signals to the RLZC 104C.

**In** flow diagram 600C depicted in **FIG. 6C****,** when the FLZC 104B becomes faulty while the CC 102 is still operational, as shown by the "X" over the FLZC 104B, the CC 102 configured as the VSM dynamically configures one of remaining ZCs from the plurality of ZCs 104A-104D as the SVSM according to the predefined priority order. In this case, the RLZC 104C, which has the priority 2, takes over as the new SVSM. The RLZC 104C monitors the health of the CC 102 and prepares to step in as the VSM if the CC 102 also fails. The SDV 101 continues operating in the normal mode, with the CC 102 remaining the VSM and the RLZC 104C configured as the SVSM.

**In** flow diagram 600D depicted in **FIG. 6D****,** when both the FLZC 104B and the CC 102 become faulty, as shown by the "X". The system 100 then dynamically configures one of remaining of the plurality of ZCs 104A-104D (in this case, the RLZC 104C) according to the predefined priority order, to the role of the VSM. Other operational ZCs are now redirecting their communications to the RLZC 104C, which now assumes the role of VSM. The RLZC 104C (i.e., now configured as the VSM) then dynamically configures the RRZC 104D having the priority 3 as the SVSM according to the predefined priority order. The RLZC 104C redirects its communications and the heartbeat signals to the RRZC 104D. The SDV 101 remains operational but in the degraded mode due to the dual failure of the FLZC 104B and the CC 102. This predefined priority order ensures that the SDV 101 continues functioning while ensuring functional safety in the plurality of HPCs.

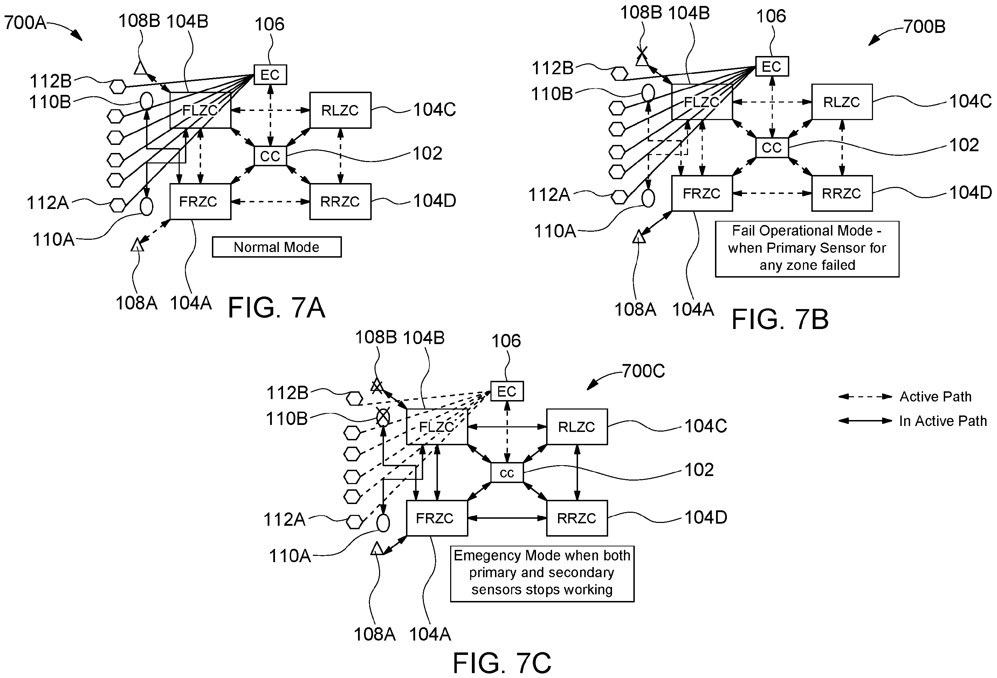

Referring now to **FIG. 7A, FIG. 7B** and **FIG. 7C****,** sensor architecture flow diagrams 700A, 700B and 700C depicting fault tolerance in multiple operational modes of the SDV 101, are illustrated, in accordance with an exemplary embodiment of the present disclosure. The sensor architecture flow diagrams 700A, 700B and 700C showcases the connections and redundancy between the plurality of sets of PSs 108A-108D, the plurality of sets of SSs 110A-110D, and the plurality of sets of TSs 112A-112D of the SDV 101. The VSM may determine one of a plurality of modes of the SDV 101 based on monitoring of the plurality of sets of PSs 108A-108D or the plurality of sets of SSs 110A-110D corresponding to the plurality of zones of the SDV 101. The sensor architecture flow diagrams 700A, 700B and 700C highlight three operational modes including the normal mode, the fault-operational mode, and the emergency mode respectively, each corresponding to different sensor activation paths depending on fault conditions.

Initially, the VSM may determine the one of the plurality of modes of the SDV 101 as a normal mode upon detection of each of the plurality of sets of PSs 108A-108D as operational based on the monitoring. In the normal mode, the VSM may dynamically activate the plurality of sets of PSs 108A-108D corresponding to the plurality of zones. In the normal mode as shown in **FIG. 7A****,** the plurality of primary sensors 108A-108D are fully functional and active. As shown in **FIG. 7A****,** the set of FLPSs 108B is connected to the FLZC 104B, and the set of FRPSs 108A is connected to the FRZC 104A. Similarly, the set of RLPSs 108C is connected to the RLZC 104C, and the set of RRPSs 108D is connected to the RRZC 104D. In the normal mode, the plurality of sets of PSs 108A-108D collect data and transmit it to a ZC of that zone which processes the received data. The communication paths between the active plurality of sets of PSs 108A-108D and the active HPCs are indicated by dotted lines, while the communication paths between inactive plurality of sets of SSs 110A-110B and the plurality of sets of TSs 112A-112D while they remain on standby are indicated by solid lines. In the normal mode, each of the plurality of ZCs 104A-104D may dynamically receive the sensor data from the corresponding sets of PSs from the corresponding zone. Upon receiving the sensor data, each of the plurality of ZCs 104A-104D may perform a plausibility test on the received sensor data to determine a plausibility score of the received sensor data in order to monitor the corresponding set of PSs from the corresponding zone.

Upon detection of one of the plurality of sets of PSs 108A-108D as faulty based on the monitoring, the VSM may further determine the one of the plurality of modes of the SDV 101 as a fault-operational mode based on the monitoring. In the fault-operational mode, the VSM may dynamically activate the plurality of sets of SSs 110A-110D corresponding to the plurality of zones. In the fault-operational mode as illustrated in **FIG. 7B****,** each of the plurality of ZCs 104A-104D may dynamically receive the sensor data from the corresponding set of SSs from the another zone. Upon receiving the sensor data, each of the plurality of ZCs 104A-104D may perform a plausibility test on the received sensor data to determine a plausibility score of the received sensor data in order to monitor the corresponding set of SSs from the another zone. For example, if the set of FLPSs 108A fails, the VSM may dynamically activate the plurality of set of SSs 110A-110D to maintain functional safety of the SDV 101. As mentioned earlier, each of the plurality of sets of SSs 110A-110D is connected to a corresponding ZC of another zone to introduce redundancy. In this case, the plurality of sets of SSs 110A-110D, which were previously inactive, is now connected to the corresponding ZC of another zone and is operationally active. Further, the set of RLSSs 110C is connected to the RRZC 104D, and the set of RRSSs 110D is connected to the RLZC 104C. If the set of FLPSs 108B fails, the plurality of sets of SSs 110A-110D may be activated. This ensures that sensor functionality in the front zone is maintained even if a set of PSs from the plurality of sets of PSs 108A-108D fails. The Fault-operational mode is characterized by the activation of the redundant plurality of sets of SSs 110A-110D, with the newly active paths highlighted by using dotted lines, while the inactive primary paths (due to sensor failure) are depicted by solid lines.

Upon detection of both the plurality of sets of PSs 108A-108D and the plurality of sets of SSs 110A-110D as faulty based on the monitoring, the VSM may determine the one of the plurality of modes of the SDV 101 as an emergency mode, as illustrated in **FIG. 7C****.** In the emergency mode, the plurality of sets of TSs 112A-112D0 are activated to take over the sensor framework. In the emergency-mode, the EC 106 may dynamically receive the sensor data from the plurality of sets of TSs 112A-112D. These plurality of sets of TSs 112A-112D are directly connected to the EC 106 and bypasses the plurality of ZCs 104A-104D. Thus, the EC 106 handles data processing and vehicle control independently. For instance, in this scenario, both the set of FLPSs 108B and the set of FLSSs 110B have failed, prompting the activation of each of the plurality of sets of the TSs 112A-112D connected directly to the EC 106. The active paths for the plurality of sets of TSs 112A-112D are indicated by the dotted lines, and the SDV 101 relies on the EC 106 to bring the SDV 101 to a safe stop or transition into a safe state.

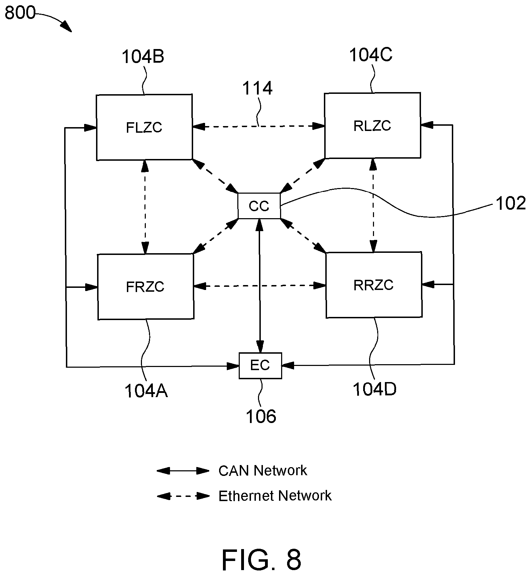

Referring now to **FIG. 8****,** a network bus topology 800 of the network buses within the SDV 101, is illustrated, in accordance with an exemplary embodiment of the present disclosure. **FIG. 8** shows how the network is designed to prevent a single point failure to ensure safety of the SDV 101 and fault-tolerant communication between the various controllers 102, 104A-104B, 106 and the plurality of sets of sensors 108A-108D, 110A-110D, 112A-112D within the SDV 101.

In this configuration, the primary network bus 114 is the Ethernet network bus, represented by dotted lines, which connects the plurality of ZCs 104A-104D such as the FLZC 104B, the RLZC 104C, the FRZC 104A, and the RRZC 104D. The plurality of ZCs 104A-104D are also connected to the CC 102 through the primary network bus 114. However, to avoid any single point failure in the Ethernet network bus, the secondary network bus 116 which is a redundant CAN network bus, shown by the solid lines, provides an alternative path. The CAN network bus connects the plurality of ZCs 104A-104D and the EC 106, which becomes crucial in case of a failure in the Ethernet network. This redundancy allows the system 100 to seamlessly switch to the CAN network bus as an alternate communication path if the Ethernet network bus fails, preventing communication breakdowns between the plurality of ZCs 104A-104D and the EC 106.

When the SDV 101 encounters an Ethernet network bus failure, the VSM triggers a transition of the SDV 101 to the emergency mode. In this mode the VSM may notify the EC 106 over the CAN network bus. The EC 106 is responsible for executing the SSP micro-service, which ensures the SDV 101 reaches a safe state by managing the critical operations of the plurality of the ZCs 104A-104D via the CAN network bus. Additionally, the VSM continuously monitors the health of both the EC 106 and the CAN network bus (i.e., the secondary network bus 116). If a fault is detected in either the EC 106 or the CAN network bus, the VSM may immediately trigger a transition of the SDV 101 to enter the emergency mode. In this scenario, the VSM, along with remaining of the plurality of ZCs 104A-104D may coordinate the execution of the SSP micro-service for the SDV 101.

Referring back to **FIG. 1****,** the SDV 101 may also include a power management subsystem which is designed to ensure operational continuity in the event of a failure in the primary power source. The SDV 101 incorporates the secondary power source, which serves as an alternate power supply to avoid a single point of failure. This redundancy allows the SDV 101 to maintain basic vehicle operations even when the primary power source fails, thereby ensuring that the SDV 101 can still function in the degraded mode.

At the center of this power management subsystem is the switch, which plays a critical role in monitoring the health of the primary power source. The switch is constantly evaluating the status of the primary power supply, scanning for faults or irregularities. In the event that a fault is detected, the switch immediately alerts the VSM. Upon receiving the fault notification, the VSM transitions the SDV 101 from the normal mode to the degraded mode. The degraded mode is designed to minimize vehicle functionalities by only allowing the SDV 101 to continue operating safely but reduced capabilities. This ensures that critical systems can still function while non-essential systems may be scaled back or turned off to conserve power.

Simultaneously, the switch also activates the secondary power source to ensure the SDV 101 continues to receive adequate power for essential operations. The seamless transition between the primary power source and the secondary power source, managed by the switch and overseen by the VSM, allows the SDV 101 to mitigate the risks associated with a primary power failure. By relying on this backup power supply, the SDV 101 may still maintain sufficient functionality to navigate safely, possibly moving to a safe location or performing other vital actions until the primary power issue is resolved.

Additionally, providing functional safety at the HPC level is a crucial aspect of maintaining operational integrity of the SDV 101. At this level, faults can occur in any hardware or software component of the plurality of controllers (i.e., HPCs), which include the plurality of ZCs 104A-104D and the CC 102. These faults may include various elements such as data functions, the micro-services, the containers, the fault managers (i.e., the master fault manager and the slave fault manager), the nodes of each of the plurality of controllers, and the voter on the CC 102. One of the key types of faults monitored at the controller level is in the vehicle feature data function, which involves fault in the plurality of micro-services such as the data acquisition service, the perception service, and the decision-making service. These services are fundamental to the autonomous operation of the SDV 101, relying heavily on sensor data for accurate decision-making. The performance island 304 of each of the plurality of controllers 102, 104A-104D may be configurable to perform the plurality of micro-services corresponding to one or more remaining ASILs (i.e., ASIL-B and ASIL-A rated services) from the plurality of ASILs.

The data acquisition service is responsible for gathering data from the plurality of sets of PSs 108A-108D of the SDV 101. To ensure data reliability, the data acquisition service conducts a plausibility test on the sensor data acquired from the plurality of sets of PSs 108A-108D to detect any potential faults. If the acquired sensor data from a primary sensor fails this plausibility test, the plausibility test indicates a fault in the primary sensor. Upon detecting a fault in the primary sensor, the data acquisition service promptly notifies the master fault manager of the associated ZC through an associated container fault manager. The master fault manager then escalates the issue to the VSM, which in turn activates a secondary sensor of the same zone to take over. This transition allows the SDV 101 to continue operating with reduced functionality, while the primary sensor fault is addressed.

If no faults are found in the sensor data, the SDV 101 remains in the normal mode. The perception service processes the acquired sensor data, and the decision-making service processes the acquired data, and the decision-making service uses the output from the perception service to determine the next course of action for the vehicle. In the SDV 101, the perception service and the decision-making service are designed to operate redundantly across three different controllers to ensure fault tolerance. The one of the plurality of controllers may be dynamically configurable as the VSM and the voter based on the predefined priority order. The performance island 304 of the one of the plurality of controllers may be configured to implement the voter. The voter may be configured to compare outputs of the at least one of the plurality of micro-services simultaneously performed by each of the set of controllers. The VSM may be dynamically configured to dynamically select a set of controllers (i.e., three ZCs from the plurality of ZCs 104A-104D) from remaining of the plurality of controllers based on a determination of one of a plurality of modes of the SDV 101. Typically, the voter runs on the CC 102 (i.e., the one of the plurality of controllers), is responsible for collecting and comparing the outputs of the plurality of micro-services from each of the set of controllers (e.g., three ZCs from the plurality of ZCs 104A-104D). The voter plays a critical role in identifying inconsistencies that may indicate faults in the system 100.

If the voter detects that outputs from each of the set of controllers (e.g., three ZCs from the plurality of ZCs 104A-104D) are about same, the voter notifies the VSM that the SDV 101 is in the normal mode. If the voter detects that none of the outputs from the set of controllers (e.g., three ZCs from the plurality of ZCs 104A-104D) match, which indicates a critical fault, and the voter immediately notifies the VSM to transition the SDV 101 into the emergency mode. This safeguard ensures that the SDV 101 responds appropriately to potential system-wide failures to maintain safety as the highest priority. If the voter detects that only output of one of the set of controllers (e.g., output of one ZC from three ZCs with remaining two of the three ZCs) does not match, the voter identifies this as a less critical fault. In this case, the voter notifies the VSM to transition the SDV 101 into the degraded mode, which restricts certain functionalities but allows the SDV 101 to continue operating safely while the fault is further investigated. In the degraded mode, in case one of the set of remaining of the plurality of controllers may be determined as faulty, the VSM may configured to dynamically select one of the rest of the remaining of the plurality of controllers to replace the faulty controller in the set of controllers. In both cases of mismatch, whether full or partial, the system 100 escalates the SDV 101 to a higher safety mode (either degraded or emergency).

The system 100 also addresses faults occurring within the plurality of micro-services performed on the performance island 304 of each of the plurality of controllers (i.e., HPCs). Each micro-service operates within one or more nodes of the performance island 304. Each node may include one or more containers. Each container may be configurable to perform one or more of the plurality of micro-services. Micro-services are essential for carrying out the various functions required by the plurality of controllers (i.e., HPCs) of the SDV 101, and a fault in any micro-service may potentially impact the entire system 100. To manage fault in the one or more of the plurality of micro-services, each container may include a container fault manager. The container fault manager is housed within each container, whose primary role is to monitor the health of the one or more of the plurality of micro-services running inside that container.

The container fault manager may be configured to monitor a first operability status of each of the one or more of the plurality of micro-services based on a set of KPIs (i.e., a safety contract). In an embodiment, the container fault manager continuously monitors for potential faults in real-time, thereby ensuring that any deviation from normal operation is detected early. If the micro-service begins to malfunction or deviates from its predefined execution parameters, the master fault manager may identify and report the issue. To ensure a consistent and structured monitoring, the one or more of the plurality of micro-services establish a safety contract (i.e., the set of KPIs) with the container fault manager within that container. The safety contract (i.e., the set of KPIs) outlines specific parameters and metrics for fault detection, allowing the container fault manager to evaluate performance of the one or more micro-services against predefined benchmarks. The safety contract (i.e., the set of KPIs) typically includes a periodicity of execution, which is the predefined periodic intervals at which the micro-service should be run. The safety contract (i.e., the set of KPIs) further includes an execution duration, which is the length of time the micro-service is expected to take to complete its tasks. The safety contract (i.e., the set of KPIs) further includes a functional checkpoints, which are the key milestones within the execution of the micro-service, where its operation is checked for faults or irregularities. The safety contract (i.e., the set of KPIs) further includes a step-sequence, which is the precise sequence in which tasks should be carried out by the micro-service. Any deviation from this sequency may indicate a fault.

By enforcing the safety contract (i.e., the set of KPIs), the container fault manager ensures that the one or more of the plurality of micro-services operates within controlled boundaries, and any abnormalities in execution are flagged as potential faults. The container fault manager of each container may also be configured to transmit the first operability status to the slave fault manager housed within the performance island 304 of that controller, based on the monitoring of the first operability status. In addition to the container fault manager, the one or more of the plurality of micro-services within that container are further monitored by the slave fault manager housed within the performance island 304 of that controller, which operates at the controller level. The slave fault manager may be configured to relaunch the corresponding container a predefined number of times in case the first operability status may be determined as faulty. The slave fault manager provides an additional layer of fault detection and monitoring, ensuring that any potential issues within the container are escalated to the master fault manager at controller level. This hierarchical approach enables the system 100 to detect and respond to faults at both the micro-service level and the container level. When a fault is detected, the slave fault manager is responsible for notifying the VSM and activates the appropriate response. This may include transitioning the SDV 101 to the degraded mode or the emergency mode.

The system 100 also includes mechanisms for fault detection at the controller level to ensure monitoring of critical components such as the slave fault manager, hypervisor, within the plurality of controllers 102, 104A-104D and the voter within the CC 102. This layer of fault detection safeguards the SDV 101 by continuously assessing the performance island 304 of each of the plurality of controllers 102, 104A-104D and reporting any identified issues to the VSM. Fault detection within the plurality of controllers 102, 104A-104D involves monitoring the core components and services that support the operation of the plurality of controllers 102, 104A-104D, such as the slave fault manager, the hypervisor, the voter and other controller nodes running on the performance island 304 of each of the plurality of controllers 102, 104A-104D. The master fault manager resides on the safety island 302 of each of the plurality of controllers 102, 104A-104D and plays a critical role in overseeing the health of the each of the plurality of controllers 102, 104A-104D. The master fault manager continuously monitors the operability status of various services running on the corresponding controller, thereby ensuring that the system 100 is functioning as expected. The master fault manager is tasked with supervising not only the micro-services but also other critical elements like the hypervisor and the voter.

The slave fault manager resides on the performance island 304 of each controller, which may be configured to monitor a second operability status to the slave fault manager based on a first set of tests (i.e., Built-in-Self-Tests) performed by the slave fault manager at predefined instances and the reception of the first operability status. The slave fault manager may also be configured to transmit the second operability status to the master fault manager based on the monitoring of the second operability status. In an embodiment, the slave fault manager may periodically send heartbeat signals to the master fault manager of the corresponding controller. The heartbeat signal may include detailed information about the second operability status of key components of the controller, including, but not limited to, the hypervisor, the voter, and the HPC nodes. In an embodiment, the hypervisor within the controller is a virtualization layer responsible for managing and allocating resources to various virtual machines running within the controller. In an embodiment, the voter typically running on the CC 102 is responsible for comparing outputs from redundant processes running on remaining controllers and identifying any mismatches or discrepancies. In an embodiment, the HPC nodes may include the plurality of micro-services related to Advanced Driver Assistance Systems (ADAS) and Autonomous Driving (AD), running in containers within the controller. The slave fault manager monitors their execution and reports any irregularities to the master fault manager. The master fault manager may be configured to relaunch the corresponding controller from the plurality of controllers 102, 104A-104D in case the second operability status may be determined as faulty.

This regular exchange of operability status allows the master fault manager to maintain a real-time overview of each of the plurality of controllers 102, 104A-104D and may detect any emerging issues. At the start-up of the each of the plurality of controllers 102, 104A-104D, and periodically during operation of each of the plurality of controllers 102, 104A-104D, the slave fault manager within the controller may perform, but is not limited to, a set of Built-in-Self-Tests (BISTs) (i.e., the first set of tests) to evaluate the integrity of the performance island 304 of the controller. The set of BISTs may check for potential faults in the critical components of the controller (i.e., HPC), such as the hypervisor and the voter to ensure that they are operating correctly. If any issues are detected, the slave fault manager immediately notifies the master fault manager. When a fault is detected within the controller (i.e., HPC), the master fault manager promptly alerts the VSM about the issue. This notification may include details of the fault, whether the fault pertains to the hypervisor, the voter, or other critical component. Additionally, if the master fault manager identifies a critical fault that threatens the overall functionality of the controller, the master fault manager immediately stops transmitting heartbeat signals. This cessation of the heartbeat signals is an indicator for the VSM, which interprets the heartbeat signals as a failure of the entire controller (i.e., HPC). In the event of such a failure of the entire controller (i.e., HPC), the VSM may take immediate action, moving the SDV 101 to a higher safety mode, such as the degraded mode and the emergency mode, depending on the severity of the fault and the availability of redundant system.

The system 100 also incorporates detection and management of faults within the ASIL D-critical services running on the safety island 302 of the controller (i.e., HPC). These critical services such as the VSM and the SVSM, as well the master fault manager is integral to provide the safety and fault-tolerance of the SDV 101. Fault detection in ASIL D-critical services is a key aspect of maintaining safety of the SDV 101, as the ASIL D-critical services manage high-integrity safety functions. The master fault manager on the safety island 302 plays a critical role in overseeing the health of these critical service and ensuring they operate without interruption.

The master fault manager may be configured to monitor a third operability status of the safety island 302 based on a second set of tests (i.e., Built-in-Self-Tests and runtime tests) performed by the master fault manager at the predefined instances and the reception of the second operability status. The master fault manager may further be configured to transmit the third operability status to the VSM based on the monitoring of the third operability status. In an embodiment, at the initial boot-up of the controller (i.e., HPC), the master fault manager performs a set of BISTs (i.e., the second set of tests) to verify the operational status of the safety island 302. These set of BISTs may be conducted to assess whether the ASIL D-critical services i.e., (i.e., the plurality of services), such as the VSM and the SVSM may be correctly initiated and ready to manage the safety functions of the SDV 101. The master fault manager checks for potential errors during the start-up phase and immediately flags any issues that could affect the execution of critical services. Once the controller is running, the master fault manager continually monitors the operability status of ASIL D-critical services (i.e., the plurality of services) through runtime tests. These runtime tests include a program flow monitoring and a temporal flow monitoring. The program flow monitoring ensures that the critical services follow their predefined execution sequence and detect any deviations or interruptions in their process flow. The temporal flow monitoring checks that the plurality of services is executed within defined time constraints to ensure timely responses critical for maintaining safety of the SDV 101. In case the one of the plurality of controllers may be determined as faulty based on the third operability status, one of the remaining of the plurality of controllers may be configured as the VSM and the voter based on the predefined priority order. In case one of the set of controllers may be determined as faulty based on the third operability status, the VSM may be configured to dynamically update the set of controllers from rest of remaining of the plurality of controllers based on the determination of one of the plurality of modes.

By performing the BISTs, the master fault manager may detect any faults that arise during the normal operation of the ASIL D-critical services (i.e., the plurality of services), thereby ensuring continued reliability of the VSM, the SVSM, and other critical components running on the safety island. In case a fault is detected during either the start-up BISTs or runtime monitoring, the master fault manager notifies the VSM immediately. Additionally, if the slave fault manager on the performance island 304 detects a fault within its domain, the slave fault manager sends a heartbeat signal to the master fault manager, which may then assess the overall health of the controller. If a fault is identified in any of the ASIL D-critical services or components monitored by the master fault manager, the VSM is alerted, allowing the VSM to take appropriate action, such as switching the SDV 101 to the degraded mode or the emergency mode. If the master fault manager detects a critical issue that affects the overall functioning of the controller or the ASIL D-critical services (i.e., the plurality of services) within the controller, the master fault manager immediately stops transmitting the heartbeat signals to the VSM. The VSM interprets the cessation of the heartbeat signals as a failure of the controller. This ensures that any critical fault in the safety island 302 or its critical services (i.e., the plurality of services) is quickly detected and acted upon to prevent further system failures and maintaining the functional safety of the SDV 101.

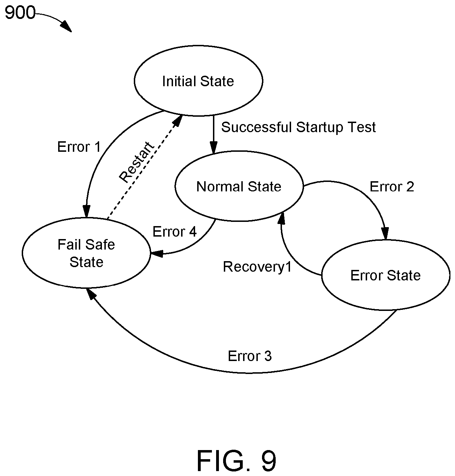

Referring now to **FIG. 9****,** a state diagram 900 depicting transition of safety states of the controller, in accordance with an exemplary embodiment of the present disclosure. The safety state transition for the controller is managed by the master fault manager, who oversees the overall safety state machine of the controller. The state diagram 900 represents various safety states, the controller transitions through based on operability status and fault conditions of the controller. The controller undergoes four main states that may include an initial state, a normal state, an error state, and a fail-safe state, with corresponding transitions triggered by various error conditions and recovery mechanisms.

The initial state is the first state entered after the start-up of the controller. During this state, both the master fault manager and the slave fault manager may execute, but is not limited to, Built-in-Self-Tests (BISTs) to check the health of the safety island 302 and the performance island 304 of the controller, respectively. The BISTs may include checks for RAM, ROM, Core functionality, and clock synchronization. Upon successful completion of the BISTs, the controller transitions to the normal state. Once the controller successfully passes the BISTs, the controller transitions to the normal state, where functionalities of each of the plurality of controllers 102, 104A-104D are active and operating normally. The master fault manager of the controller continues to monitor faults while performing its regular operations. If a recoverable fault is detected, the master fault manager may transition the controller to the error state to attempt recovery.

The error state is entered when a recoverable error is detected in the normal state. Errors in the error state may relate to failures in micro-services, containers, or nodes within the controller. In the error state, the slave fault manager attempts to recover the faulty components by re-launching the affected container or micro-service. The VSM is not immediately notified in the error state, as the controller tries to recover on its own. If recovery is successful (through Recovery 1), the master fault manager transitions the controller back to the normal state. If recovery fails, the master fault manager may escalate the HPC to the fail-safe state. If the HPC detects non-recoverable faults, such as the failure of a BIST, non-recoverable errors in micro-services, containers, or fault managers, or failures in critical components like the hypervisor or the voter, the controller enters the fail-safe state. In the fail-safe state, the controller attempts to restart and move back to the initial state. If the master fault manager is still functional, the master fault manager may notify the VSM of the failure. If the master fault manager stops transmitting heartbeat signals to the VSM, it may be considered as a critical HPC failure.

**FIG. 9** outlines several key transitions between the four states. In case of Error 1, if the controller fails a BIST during the initial state, or if there is a failure in either the master fault manager or the slave fault manager or key performance/safety components, the controller transitions directly to the fail-safe state. In case of Error 2, if a recoverable error (such as micro-service or container failure) occurs in the normal state, the controller transitions to the error state to attempt recovery. In case of error 3, if the controller cannot recover from error in the error state, despite the master fault manager attempting to re-launch the faulty component, the controller escalates to the fail-safe state. In case of Error 4, if a critical fault occurs in the normal state, such as the failure of a fault manager or essential component like the VSM, the controller moves directly to the fail-safe state.

Recovery 1 occurs when the slave fault manager successfully re-launches a faulty container, micro-service, or node within a predefined number of attempts, thereby allowing the controller to return to the normal state. In case of Restart, if there are non-recoverable faults, the master fault manager restarts the controller for returning to the initial state to attempt recovery from detected faults. In cases where multiple faults are detected, the controller may prioritize transitioning to a higher safety state (i.e., moving from normal to error, or from error to fail-safe) to ensure safety of the SDV 101.

Referring back to **FIG. 1****,** the system 100 also includes fault tolerance mechanisms at the HPC level to ensure that the SDV 101 can continue to operate even when faults are detected in the plurality of controllers 102, 104A-104D. The system 100 design address fault tolerance in key data functions such as the perception service and the decision-making service, which are critical for the operations of the SDV 101. The fault tolerance mechanisms incorporate redundancy in the processing of data functions to prevent single point failure that may compromise the ability of the SDV 101 to operate safely. Specifically, the perception service and the decision-making service are not confined to a single controller. Instead, the perception service and the decision-making service are distributed across three different controllers (the set of controllers). This ensures that if one controller fails, the same data functions may still be processed by the remaining of the set of controllers, thus maintaining functionality of the SDV 101.

In the event that one of the plurality of controllers encounters a fault or fails, the VSM may dynamically shift the workload of the one of the plurality of controllers to one of remaining of the plurality of controllers which is closest to the one of the plurality of controllers. This allows the SDV 101 to continue running without a complete shutdown of critical services. Depending on the extent of the fault and the number of controllers affected, the VSM may adjust the operational modes of the SDV 101 to ensure safety.

The voter monitors the output of the three ZCs from the plurality of ZCs 104A-104D (i.e., set of controllers). If discrepancies or faults are detected in the data outputs from one or more controllers, the voter notifies the VSM of the faults and the VSM moves the SDV 101 to the degraded mode or, in severe cases, to the emergency mode, depending on how many controllers are compromised. The fault tolerance mechanism ensures that the SDV 101 does not rely on faulty or inconsistent data, thereby minimizing the risk of unsafe driving decisions. While the VSM transitions the SDV 101 to a safe operational mode, parallel recovery solutions are also implemented. The master fault manager of a faulty controller attempts to recover the faulty controller by identifying and addressing the fault detected within the faulty controller. This could involve re-launching failed micro-services, containers, or even restarting the faulty controller to resolve critical issues. Once the controller is successfully recovered, the controller may rejoin the data function execution to support the remaining of the plurality of controllers.

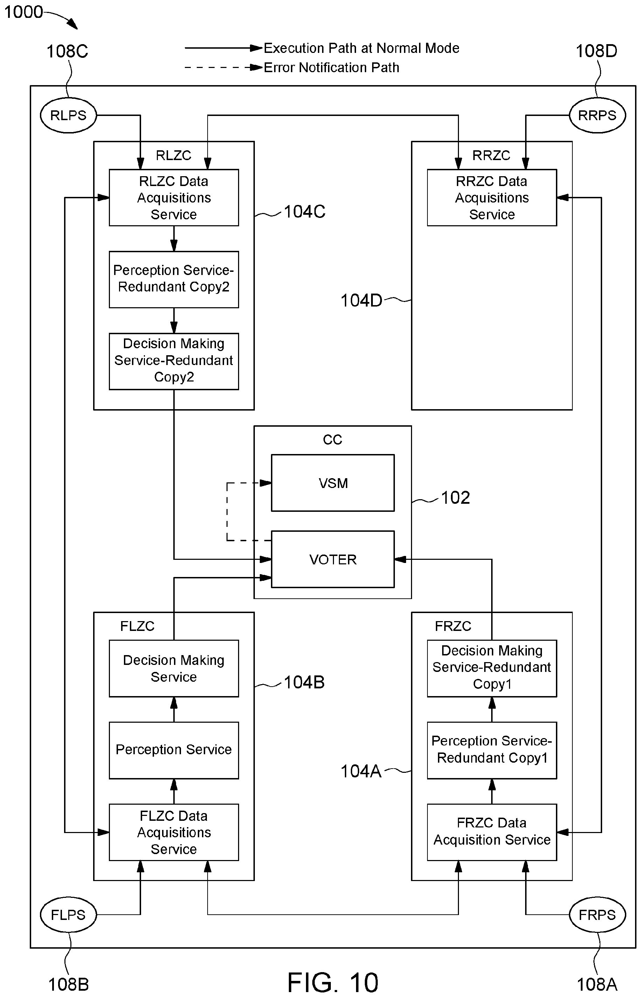

Referring now to **FIG. 10****,** a flow diagram 1000 depicting execution flow in normal mode for the SDV 101, is illustrated, in accordance with an embodiment of the present disclosure. **FIG. 10** specifically showing how the voter operates in the CC 102 to maintain vehicle functionality by processing outputs from three of the plurality of controllers (i.e., set of controllers) such as three of the plurality of ZCs 104A-104D.

The RLZC 104C and the FRZC 104A are responsible for processing redundant copies of the perception service and the decision-making service, ensuring that critical data from the vehicle sensors is consistently available and processed even in the event of a fault. The plurality of ZCs 104A-104D also manages the data acquisition service, which collects sensor information from the plurality of primary sensors within each zone of the SDV 101. The RRZC 104D and the FLZC 104B also perform similar data acquisition service but handle other sections of the sensor network within the SDV 101. The RLZC 104C and the FRZC 104A execute redundant copies of the perception service and the decision making service, indicated as "Redundant Copy 1" and "Redundant Copy 2". These copies ensure that each function is independently verified across different ZCs to prevent errors in data processing. The data acquisition service of each of the plurality of ZCs 104A-104B receives data from a respective set of PSs from the plurality of sets of PSs 108A-108D. For example, the FRZC 104A receives data from the set of FRPSs 108A, the FLZC 104B receives data from the set of FLPSs 108B, the RLZC 104C receives data from the set of RLPSs 108C, and the RRZC 104D receives data from the set of RRPSs 108D. The perception service takes data from the respective data acquisition service of the corresponding ZC and processes the data and passes the processed data on to the decision making service, which determines the appropriate course of action to be taken by the SDV 101.

The CC 102 houses the voter and the VSM. The voter plays a critical role in ensuring the integrity of the decision-making services housed within the three of the plurality of ZCs (i.e., set of controllers) by comparing outputs of the decision-making service of the three of the plurality of ZCs (i.e., set of controllers). The voter checks the output from the three of the plurality of ZCs (i.e., set of controllers) and ensures that the outputs are consistent. If the outputs from the three of the plurality of ZCs (i.e., set of controllers) match, the SDV 101 remains in the normal mode. In normal mode, the voter receives outputs from the three of the plurality of ZCs (i.e., the FRZC 104A, the FLZC 104B, and the RLZC 104C). When the outputs from the three of the plurality of ZCs (i.e., set of controllers) are matching, the voter verifies that the SDV 101 is operating in the normal mode, with no faults detected in any of the plurality of ZCs 104A-104D. In addition to processing the outputs from the three of the plurality of ZCs (i.e., set of controllers), the voter continuously monitors for any errors or discrepancies in the outputs from the three of the plurality of ZCs (i.e., set of controllers) based on a mismatch of an output of one ZC from the three of the plurality of ZCs with other two outputs of remaining two ZCs from the three of the plurality of ZCs. If the voter detects the mismatch of the output with the other two outputs, the voter informs the VSM, which in turn triggers a transition of the SDV 101 to the degraded mode or other safety mode, depending on the severity of the error.

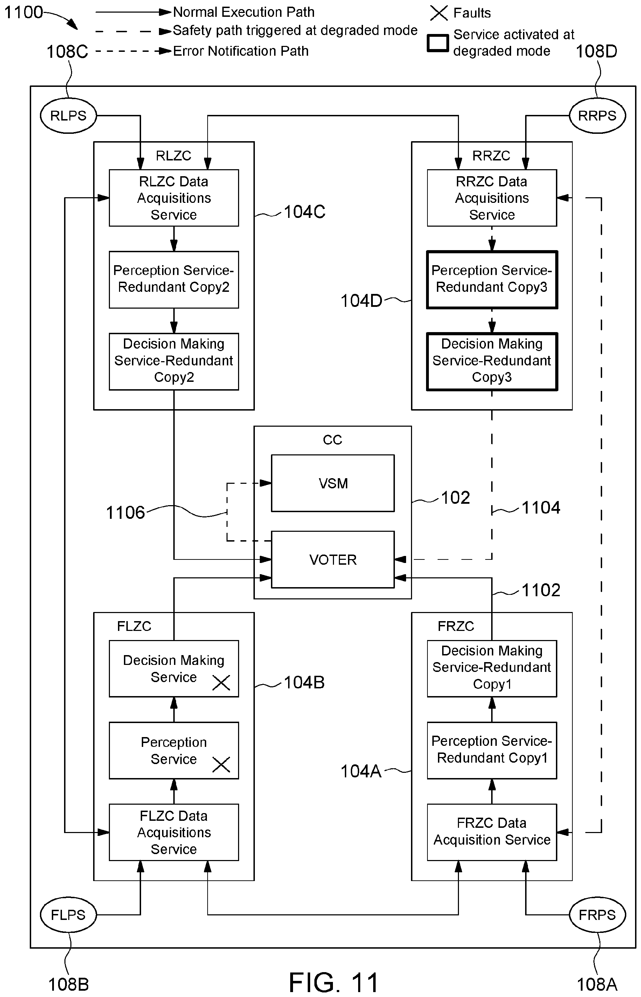

Referring now to **FIG. 11****,** a flow diagram 1100 depicting execution flow in degraded mode for the SDV 101, is illustrated, in accordance with an embodiment of the present disclosure. The SDV 101 transitions into the degraded mode due to a detected fault in one of the plurality of controllers. In this case, the fault is identified within the FLZC 104B. The FLZC 104B has encountered a failure, as indicated by the crosses over both the perception service and the decision making service. The outputs of the FLZC 104B are no longer reliable, prompting the system 100 to exclude the FLZC 104B from the operational flow. The remaining ZCs from the plurality of ZCs, namely the RLZC 104C and the RRZC 104D, continue to function normally, each monitoring the data acquisition service, the perception service, and the decision making service. The controllers ensure that the SDV 101 can still operate, leveraging their redundant capabilities.

At the core of the CC 102 is the voter, which compares the output from the perception services and the decision making service executed by the three of the plurality of ZCs (i.e., set of controllers). The voter has detected a mismatch in the output from the FLZC 104B, which causes the FLZC 104B to notify the VSM about the fault. In response, the VSM triggers a failover mechanism, launching redundant copies of the perception service and the decision making service on the RRZC 104D. The FLZC 104B was responsible for executing a redundant copy of both the perception service and the decision making service. However, due to the failure, the services are deactivated, and their redundant functions are shifted to the RRZC 104D, which now handles both its own tasks and the previously assigned tasks of the FLZC 104B. The RLZC 104C continues to function without fault, providing data from the perception service and the decision making service.

The RLZC 104C continues to operate along the normal execution path, transmitting its valid outputs to the voter within the CC 102. These operations are depicted by first arrows 1102, which represent the flow of valid data during normal operation. Once the voter detects the mismatch in output from the FLZC 104B, the voter sends an error notification to the VSM to initiate corrective actions. In response to the fault, the VSM triggers the launch of the redundant perception service and the decision making service on the RRZC 104D. This shift in execution is represented by second arrows 1104, which show the rerouted flow of data processing to ensure continued vehicle operation in the degraded mode.

The set of FRPSs 108A, the set of FLPSs 108B, the set of RLPSs 108C, and the set of RRPSs 108D, continue to feed data into the respective ZCs, enabling them to perform their data acquisition services. Despite the failure of the FLZC 104B, the other ZCs remain fully operational and continue to process sensor data to maintain vehicle control. In degraded mode, the system 100 ensures that fault management is handled dynamically. The voter continuously monitors the outputs from the ZC and immediately flag any discrepancies. By notifying the VSM, the VSM may reallocate computing tasks from the faulty FLZC 104B to the remaining functional ZCs, specifically the RRZC 104D in this case.

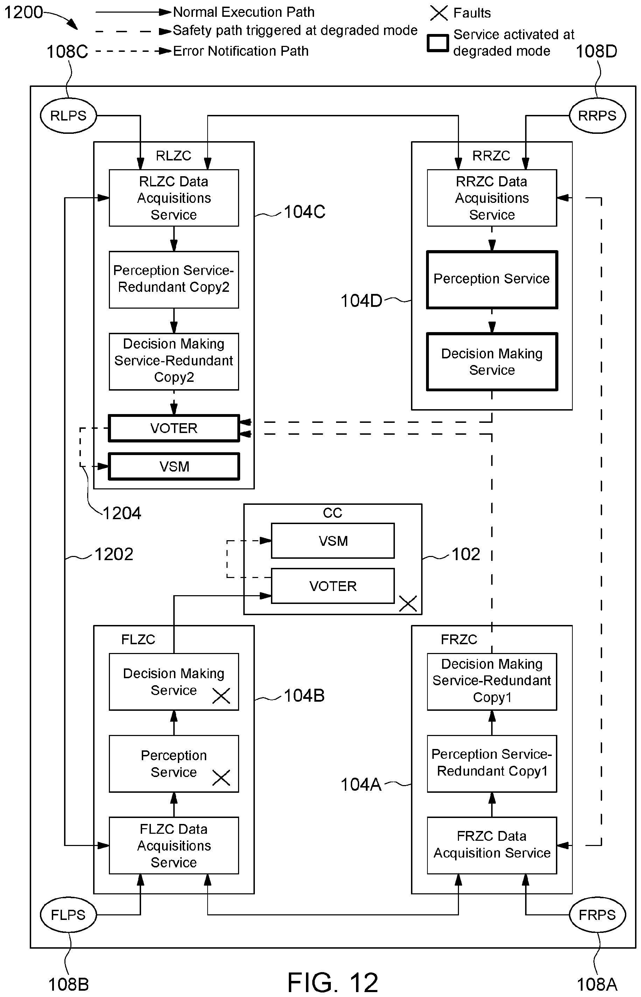

Referring now to **FIG. 12****,** another flow diagram 1200 depicting execution flow in the degraded mode for the SDV 101, is illustrated, in accordance with an embodiment of the present disclosure. **FIG. 12** depicts a scenario where the SDV 101 remains in the degraded mode after experiencing a simultaneous fault in both the CC 102 and one of the plurality of ZCs 104A-104D, specifically the FLZC 104B. **FIG. 12** highlights the fault-tolerant behavior of the system 100 by showcasing how the SDV 101 continues to operate even when the CC 102 becomes faulty, with the critical services transferred to one of remaining ZCs from the plurality of ZCs 104A-104D, determined by the predefined priority order.

The FLZC 104B, which is one of the ZCs, is identified as faulty, as indicated by the crosses over its perception service and the decision making service. This results in the exclusion of the FLZC 104B from the operational flow. The RLZC 104C and the RRZC 104D continue to operate normally, each performing their respective data acquisition services, the perception services, and the decision making services. The plurality of ZCs is essential for maintaining vehicle control during degraded mode operations.

In this scenario, the CC 102 has become faulty, as shown by the cross over the voter and the VSM within the CC 102. The system 100 identifies the fault in the CC 102 when the RLZC 104C, acting as the SVSM, does not receive a heartbeat signal from the CC 102, indicating a failure. As a result, the voter and the VSM service, which are typically executed on the CC 102, are dynamically reassigned to the RLZC 104C based on the predefined priority order. This ensures that the ASIL D-critical services continue to function despite the failure of the CC 102. The RLZC 104C now takes over the role of executing the voter and the VSM service, in addition to its original tasks of managing the perception service and the decision-making service (redundant copy 2). The RRZC 104D is still responsible for running both the perception service and the decision making service (redundant copy 3), as well as hosting the services previously executed by the faulty FLZC 104B.

In the normal execution path, the RLZC 104C and the RRZC 104D continue to function along the normal execution path, as represented by first arrows 1202, providing valid perception output and decision-making output to a newly assigned voter within the RLZC 104C. Upon detecting the fault in the CC 102, the system 100 initiates the error notification path, as shown by second arrows 1204. The SVSM in the RLZC 104C identifies the failure of the CC 102 and automatically transitions the voter and the VSM to the RLZC 104C. In degraded mode execution path, third arrows 1206 represent the rerouted data flow in the degraded mode, where the RLZC 104C takes over as the primary execution node for the voter and the VSM, as well as maintaining its perception service and the decision-making services. The RRZC 104D continues to operate its services in parallel. The plurality of primary sensors, represented by the set of FRPSs 108A, the set of FLPSs 108B, the set of RLPSs 108C, and the set of RRPSs 108D, continue to provide sensor data to their respective ZCs. The RLZC 104C and the RRZC 104D both handle their data acquisition functions effectively, thereby ensuring that the SDV 101 maintains situational awareness despite the faults.

Referring back to **FIG. 1****,** the system 100 may also include faut tolerance mechanism implemented at the HPC-level focusing on ensuring continued operation of a controller in case of a failure in a micro-service within a container of the container. The slave fault manager, housed at each of the plurality of controller (i.e., the FRZC 104A, the FLZC 104B, the RLZC 104C, the RRZC 104D, and the CC 102), continuously monitors the performance of micro-services running within its assigned container. These micro-services may include key functions such as perception services, decision-making services, and data acquisition services, which are critical for control and operation of the SDV 101.

In the event of a failure of these micro-services, the slave fault manager within a faulty controller attempts to recover by re-launching a corresponding container via the container orchestrator. This recovery process is automatically initiated and repeated for a predefined number of attempts, during which the slave fault manager aims to restore the failed micro-service to its operational state. The container orchestrator is responsible for managing the deployment, scaling, and operation of the micro-services to ensure theses micro-services are re-launched correctly after a failure. If the slave fault manager exhausts its predefined attempts to recover the micro-service and the failure still persists, the slave fault manager escalates the issue by notifying the master fault manager. The master fault manager promptly informs the VSM located at the CC 102, about the detected fault.

Upon receiving the fault notification, the VSM activates the fault tolerance mechanism by instructing one of the remaining controllers from the plurality of controllers 102, 104A-104D as per the predefined priority order to take over the tasks that were being processed by the faulty controller. For example, if the micro-service failure occurs at the FLZC 104B, the VSM would dynamically assign the redundant processing tasks to the RRZC 104D, which may take over the perception service and the decision-making service that were previously handled by the FLZC 104B.

The system 100 further implements fault tolerance at the controller platform level to handle faults that may occur in the core components of the plurality of controllers. Each controller (i.e., the FRZC 104A, the FLZC 104B, the RLZC 104C, the RRZC 104D, and the CC 102) runs essential platform services, including operating systems, middleware, and other infrastructure that enable the execution of micro-services like the perception service, the decision making service, and the data acquisition service. Failures of the controller platform may result in a complete system outage if not addressed, which is why the system 100 is designed with recover mechanisms managed by the master fault manager located within each of the plurality of controllers 102, 104A-104D.

When a fault occurs within the controller platform or any of its critical components, the master fault manager of the controller attempts to recover the faulty controller by restarting the faulty controller. This restart brings the faulty controller back to its initial state. The master fault manager monitors the controller during this restart process to determine whether the fault has been resolved. If the restart successfully restores the controller, the controller resumes normal operations without further interruption. However, if the fault persists even after the restart, the master fault manager escalates the issue by notifying the VSM. The VSM is responsible for ensuring that the SDV 101 continues to operate safely even in the presence of faults. Upon receiving the notification from the master fault manager, the VSM activates a fault tolerance mechanism by dynamically reassigning the processing tasks of the faulty controller to one of the remaining controllers from the plurality of controllers 102, 104A-104D, selected based on the predefined priority order. This reassignment ensures that the SDV 101 remains operational despite the fault. For example, if a fault occurs in the FLZC 104B, the RLZC 104C or another active controller would take over the tasks of the failed FLZC 104B, such as redundant processing of the perception service and the decision-making service. Additionally, when the master fault manager detects an unrecoverable fault, the master fault manager stops sending the heartbeat signal to the VSM. The heartbeat signal is a regular signal sent by the master fault manager to the VSM to confirm that the controller is functioning correctly. The absence of this heartbeat signal prompts the VSM to take corrective action.

The system 100 also implements fault tolerance mechanisms which are extended to cover ASIL D-critical services running on the plurality of HPCs. ASIL D (Autonomous Safety Integrity Level) refers to the highest safety requirement for automotive applications, particularly those with the potential to lead to hazardous conditions in the event of a failure. In this system 100, critical services, such as the vehicle safety monitor (VSM) service, the SVSM service, the fault management service, are classified under ASIL D critical services to ensure the highest level of functional safety. To prevent any single point failure within the ASIL D critical services, the system 100 uses a fault tolerance mechanism. When an ASIL D-critical service experiences a fault in any controller, the master fault manager attempts to recover from the fault by restarting the faulty controller. This restart process aims to reinitialize the faulty controller in its default state, thereby restoring the critical services required for safe vehicle operation.

However, if the controller remains faulty even after the restart, the VSM performs a critical role in detecting the failure. The VSM continuously monitors the health of each controller by receiving periodic heartbeat signals from the master fault manager of each controller by receiving periodic heartbeat signals from the master fault manager, which signals that the controller is functioning correctly. When the VSM fails to receive the heartbeat signals from a specific controller, the VSM recognized the absence of the heartbeat signal as an indication of a critical fault within that specific controller. In response, the VSM initiates the predefined priority order, whereby one of the remaining controllers is selected to take over the processing of the tasks originally handled by the faulty controller. For example, if the FRZC 104A encounters a fault and fails to recover, the RRZC 104D or another active HPC may assume the redundant processing of the VSM service, the SVSM service, or any other ASIL D-critical service.

In an embodiment, the disclosed system 100 may be implemented as a non-transitory computer-readable medium (CRM) that stores executable instructions for providing functional safety of a controller of the SDV 101. The CRM may store non-transitory computer-readable instructions that, when executed by a plurality of controllers, cause the system 100 to perform various operations described in the present disclosure. The CRM may be any form of non-volatile memory, such as a flash memory, a random access memory (RAM), a read-only memory (ROM), or an electrically erasable programmable read-only memory (EEPROM), volatile memory, nonvolatile memory, hard drives, CD ROMs, DVDs, flash drives, disks, and any other known physical storage media configured to store data and executable instructions for providing functional safety of a controller of the SDV 101.

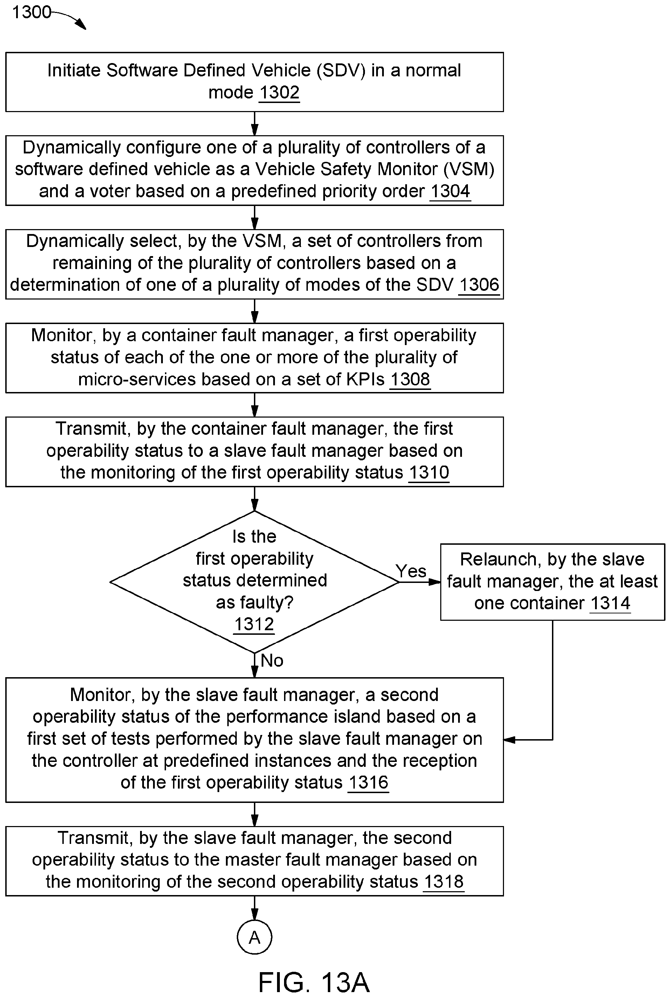

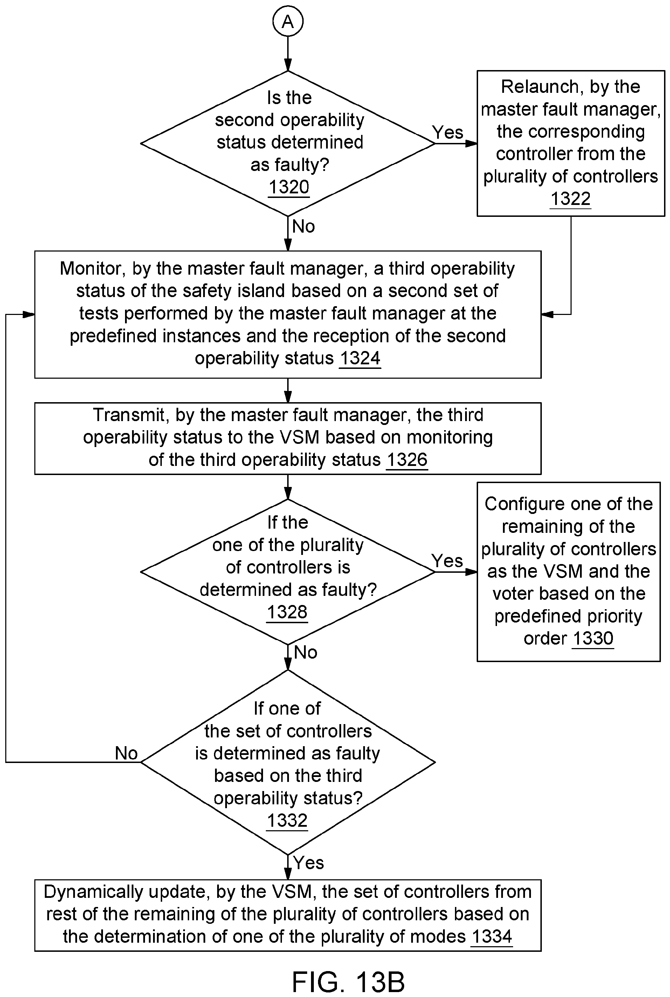

Referring now to **FIG. 13A** and **FIG. 13B****,** a flowchart 1300 of a method for providing functional safety of a controller of the SDV 101 is illustrated, in accordance with an embodiment of the present disclosure. **FIG. 13A** and **FIG. 13B** are explained in conjunction with **FIGs. 1-12****.** The flowchart 1300 may include a plurality of steps.

At step 1302, the SDV 101 may be initiated in a normal mode. In the normal mode, one of a plurality of controllers 102, 104A-104D of the SDV 101, at step 1304, may be dynamically configured as a Vehicle Safety Monitor (VSM) and a voter based on a predefined priority order. In an embodiment, each of the plurality of controllers 102, 104A-104D may include the safety island 302 configurable to perform a plurality of services corresponding to one or more automotive safety integrity levels (ASILs) from a plurality of ASILs. The each of the plurality of controllers 102, 104A-104D may further include the performance island 304 configurable to perform a plurality of micro-services corresponding to one or more remaining ASILs from the plurality of ASILs. In an embodiment, the performance island 304 may include at least one node that may include at least one container configurable to perform one or more of the plurality of micro-services.

Further at step 1306, the VSM may dynamically select a set of controllers from remaining of the plurality of controllers based on a determination of one of a plurality of modes of the SDV 101. In an embodiment, the set of controllers may be configured to simultaneously perform at least one of the plurality of micro-services. Further at step 1308, the container fault manager may monitor a first operability status of each of the one or more of the plurality of micro-services based on a set of KPIs. The container fault manager, at step 1310, may transmit the first operability status to the slave fault manager based on the monitoring of the first operability status. The slave fault manager, at step 1312, may perform a check to determine if the first operability status may be determined as faulty. If the first operability status may be determined as faulty, the slave fault manager, at step 1314, may relaunch the at least one container. Further, the slave fault manager, at step 1316, may monitor a second operability status of the performance island 304 based on the first set of tests (e.g., Built-in-Self-Tests) performed by the slave fault manager on the controller at predefined instances and the reception of the first operability status. However, if the first operability status may not be determined as faulty, the slave fault manager may proceed to the step 1316. Further, the slave fault manager, at step 1318, may transmit the second operability status to the master fault manager based on the monitoring of the second operability status.

The master fault manager, at step 1320, may perform a check to determine if the second operability status may be determined as faulty. If the second operability status may be determined as faulty, the master fault manager, at step 1322, may relaunch the corresponding controller from the plurality of controllers 102, 104A-104D. Further, the master fault manager, at step 1324, may monitor a third operability status of the safety island based on the second set of tests (e.g., Built-in-Self-Tests and runtime tests) performed by the master fault manager at the predefined instances and the reception of the second operability status. However, if the second operability status may not be determined as faulty, the master fault manager may continue to perform step 1324. Further, the master fault manager, at step 1326, may transmit the third operability status to the VSM based on monitoring of the third operability status to the VSM based on monitoring of the third operability status.

The VSM, at step 1328, may perform a check to determine if the one of the plurality of controllers may be determined as faulty. If the one of the plurality of controllers may be determined as faulty, one of the remaining of the plurality of controllers, at step 1330, may be configured as the VSM and the voter based on the predefined priority order. However, if the one of the plurality of controllers may not be determined as faulty, the VSM, at step 1332, may perform a check to determine if the one of the set of controllers may be determined as faulty based on the third operability status. If the one of the set of controllers may be determined as faulty based on the third operability status, the VSM, at step 1334, may dynamically update the set of controllers from rest of the remaining of the plurality of controllers based on the determination of the one of the plurality of modes. However, if the one of the set of controllers may not be determined as faulty based on the third operability status, the VSM may continue from the step 1324.

Thus, the disclosed method 1300 and system 100 overcomes the limitations of existing vehicle architectures by introducing a robust, scalable, and functionally safe controller and SDV framework. The disclosed method 1300 and system 100 provide a fault-operational architecture, allowing the SDV 101 to continue operating with full functionality even in the event of a fault in the sensors. The method 1300 and system 100 introduce redundancy in the vehicle architecture, thereby ensuring efficient resource utilization across controllers. This redundancy optimizes the bandwidth usage of all controllers for continuous data processing during vehicle operation. The disclosed method 1300 and system 100 resolve the issue of single point failure within the SDV 101. By defining multiple vehicle modes based on the type and severity of faults, the system 100 implements fault recovery mechanisms that allow the SDV 101 to mitigate any potential hazards during vehicle operation.

The specification has described the disclosed method 1300 and system 100 for ensuring functional safety of sensors in a software defined vehicle. The illustrated steps are set out to explain the exemplary embodiments shown, and it should be anticipated that ongoing technological development may change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) may be apparent to persons skilled in the relevant art(s) based on the teachings contained herein. Such alternatives fall within the scope of the disclosed embodiments.

Furthermore, one or more non-transitory computer-readable medium may be utilized in implementing embodiments consistent with the present disclosure. A non-transitory computer-readable medium refers to any type of physical memory on which information or data readable by a processor may be stored. Thus, a non-transitory computer-readable medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

Also disclosed herein are the following clauses:
1. A software defined vehicle (SDV), comprising:
   a plurality of controllers, each comprising:
   a safety island configurable to perform a plurality of services corresponding to one or more automotive safety integrity levels (ASILs) from a plurality of ASILs; and
   a performance island configurable to perform a plurality of micro-services corresponding to one or more remaining ASILs from the plurality of ASILs, wherein the performance island comprises:
      at least one node comprising:
      at least one container configurable to perform one or more of the plurality of micro-services,
   wherein one of the plurality of controllers is dynamically configurable as a Vehicle Safety Monitor (VSM) and a voter based on a predefined priority order,
   wherein the VSM is configured to dynamically select a set of controllers from remaining of the plurality of controllers based on a determination of one of a plurality of modes of the SDV, and
   wherein the set of controllers are configured to simultaneously perform at least one of the plurality of micro-services.
2. The SDV of clause 1, wherein the safety island comprises a master fault manager,
   wherein the performance island comprises a slave fault manager communicatively coupled to the master fault manager,
   wherein the at least one container comprises a container fault manager communicatively coupled to the slave fault manager,
   wherein the container fault manager is configured to:
      monitor a first operability status of each of the one or more of the plurality of micro-services based on a set of KPIs, and
      transmit the first operability status to the slave fault manager based on the monitoring of the first operability status,
   wherein the slave fault manager is configured to:
      monitor a second operability status of the performance island based on: a first set of tests performed by the slave fault manager at predefined instances and the reception of the first operability status; and
      transmit the second operability status to the master fault manager based on the monitoring of the second operability status;
   wherein the master fault manager is configured to:
      monitor a third operability status of the safety island based on: a second set of tests performed by the master fault manager at the predefined instances and the reception of the second operability status, and
      transmit the third operability status to the VSM based on the monitoring of the third operability status.
3. The SDV of clause 2, wherein the slave fault manager is configured to relaunch the at least one container a predefined number of times in case the first operability status is determined as faulty, and
   wherein the master fault manager is configured to relaunch the corresponding controller from the plurality of controllers in case the second operability status is determined as faulty.
4. The SDV of clause 3, wherein in case the one of the plurality of controllers is determined as faulty based on the third operability status, one of the remaining of the plurality of controllers is configured as the VSM and the voter based on the predefined priority order, and
   in case one of the set of controllers is determined as faulty based on the third operability status, the VSM is configured to dynamically update the set of controllers from rest of the remaining of the plurality of controllers based on the determination of one of the plurality of modes.
5. The SDV of clause 4, wherein the plurality of services comprises a plurality of critical services, a set of sensor services and a shadow-VSM service, and
   wherein the plurality of micro-services comprises a data acquisition service, a perception service and a decision-making service,
   wherein the performance island of the one of the plurality of controllers is configurable to implement the voter,
   wherein the voter is configured to compare outputs of the at least one of the plurality of micro-services simultaneously performed by each of the set of controllers,
   wherein the SDV is determined to be in a normal mode as the one of the plurality of modes in case the outputs from each of the set of controllers are about same,
   wherein the SDV is determined to be in a degraded mode as the one of the plurality of modes in case output of one of the set of controllers is not about same with the outputs of rest of the set of controllers, and
   wherein the SDV is determined to be in an emergency mode as the one of the plurality of modes in case each of the outputs of the set of controllers are not about same.
6. The SDV of clause 5, wherein in the degraded mode, in case one of the set of remaining of the plurality of controllers is determined as faulty, the VSM is configured to dynamically select one of the rest of the remaining of the plurality of controllers to replace the faulty controller in the set of controllers.
7. The SDV of clause 1, wherein the one or more ASILs corresponding to which the plurality of services are performed by the safety island are of higher priority than the one or more remaining ASILs corresponding to which the plurality of micro-services are performed by the performance island.
8. A functionally safe automotive controller of a software defined vehicle (SDV), the controller comprising:
   a safety island configurable to perform a plurality of services corresponding to one or more automotive safety integrity levels (ASILs) from a plurality of ASILs; and
   a performance island configurable to perform a plurality of micro-services corresponding to one or more remaining safety levels from the plurality of ASILs, wherein the performance island comprises:
      at least one node comprising:
      at least one container configurable to perform one or more of the plurality of micro-services.
9. The controller of clause 8, wherein the safety island comprises a master fault manager,
   wherein the performance island comprises a slave fault manager communicatively coupled to the master fault manager,
   wherein the at least one container comprises a container fault manager communicatively coupled to the slave fault manager,
   wherein the container fault manager is configured to:
      monitor a first operability status of each of the one or more of the plurality of micro-services based on a set of KPIs, and
      transmit the first operability status to the slave fault manager based on the monitoring of the first operability status,
   wherein the slave fault manager is configured to:
      monitor a second operability status of the performance island based on: a first set of tests performed by the slave fault manager at predefined instances and the reception of the first operability status; and
      transmit the second operability status to the master fault manager based on the monitoring of the second operability status; and
   wherein the master fault manager is configured to:
      monitor a third operability status of the safety island based on: a second set of tests performed by the master fault manager at the predefined instances and the reception of the second operability status.
10. The controller of clause 9, wherein the slave fault manager is configured to relaunch the at least one container a predefined number of times in case the first operability status is determined as faulty, and
   wherein the master fault manager is configured to relaunch the controller in case the second operability status is determined as faulty.
11. The controller of clause 10, wherein the plurality of services comprises a plurality of critical services, a set of sensor services, a Vehicle Safety Monitor (VSM) service and a shadow-VSM service;
   wherein the plurality of micro-services comprises a data acquisition service, a perception service and a decision making service,
   wherein the performance island of the controller is configurable as a voter,
   wherein the voter is configured to compare output of the controller with outputs of a plurality of external controllers, and
   wherein the SDV is determined to be one of a plurality of modes based on the comparison.
12. The controller of clause 8, wherein the one or more ASILs corresponding to which the plurality of services are performed by the safety island are of higher priority than the one or more remaining ASILs corresponding to which the plurality of micro-services are performed by the performance island.
13. A method of providing functional safety of a controller of a software defined vehicle (SDV), the method comprising:
   dynamically configuring one of a plurality of controllers as a Vehicle Safety Monitor (VSM) and a voter based on a predefined priority order;
   dynamically selecting, by the VSM, a set of controllers from remaining of the plurality of controllers based on a determination of one of a plurality of modes of the SDV,
   wherein each of the plurality of controllers comprises:
      a safety island configurable to perform a plurality of services corresponding to one or more automotive safety integrity levels (ASILs) from a plurality of ASILs; and
      a performance island configurable to perform a plurality of micro-services corresponding to one or more remaining ASILs from the plurality of ASILs, wherein the performance island comprises:
         at least one node comprising:
            at least one container configurable to perform one or more of
         the plurality of micro-services, and
   wherein the set of controllers are configured to simultaneously perform at least one of the plurality of micro-services.
14. The method of clause 13, wherein the safety island comprises a master fault manager,
   wherein the performance island comprises a slave fault manager communicatively coupled to the master fault manager,
   wherein the at least one container comprises a container fault manager communicatively coupled to the slave fault manager,
   wherein the method comprises:
      monitoring, by the container fault manager, a first operability status of each of the one or more of the plurality of micro-services based on a set of KPIs;
      transmitting, by the container fault manager, the first operability status to the slave fault manager based on the monitoring of the first operability status; and
      monitoring, by the slave fault manager, a second operability status of the performance island based on: a first set of tests performed by the slave fault manager at predefined instances and the reception of the first operability status;
      transmitting, by the slave fault manager, the second operability status to the master fault manager based on the monitoring of the second operability status;
      monitoring, by the master fault manager, a third operability status of the safety island based on: a second set of tests performed by the master fault manager at the predefined instances and the reception of the second operability status; and
      transmitting, by the master fault manager, the third operability status to the VSM based on the monitoring of the third operability status.
15. The method of clause 14, comprising:
   relaunching, by the slave fault manager, the at least one container a predefined number of times in case the first operability status is determined as faulty; and
   relaunching, by the master fault manager, the corresponding controller from the plurality of controllers in case the second operability status is determined as faulty.
16. The method of clause 15, wherein in case the one of the plurality of controllers is determined as faulty based on the third operability status, one of the remaining of the plurality of controllers is configured as the VSM and the voter based on the predefined priority order, and
   in case one of the set of controllers is determined as faulty based on the third operability status, the VSM is configured to dynamically update the set of controllers from rest of the remaining of the plurality of controllers based on the determination of one of the plurality of modes.
17. The method of clause 13, wherein the one or more ASILs corresponding to which the plurality of services are performed by the safety island are of higher priority than the one or more remaining ASILs corresponding to which the plurality of micro-services are performed by the performance island.
18. A non-transitory computer-readable medium storing computer-executable instructions for providing functional safety of a controller of a software defined vehicle (SDV), the computer-executable instructions configured for:
   dynamically configuring one of a plurality of controllers as a Vehicle Safety Monitor (VSM) and a voter based on a predefined priority order;
   dynamically selecting, by the VSM, a set of controllers from remaining of the plurality of controllers based on a determination of one of a plurality of modes of the SDV,
      wherein each of the plurality of controllers comprises:
      a safety island configurable to perform a plurality of services corresponding to one or more automotive safety integrity levels (ASILs) from a plurality of ASILs; and
      a performance island configurable to perform a plurality of micro-services corresponding to one or more remaining ASILs from the plurality of ASILs, wherein the performance island comprises:
         at least one node comprising:
         at least one container configurable to perform one or more of the plurality of micro-services, and
   wherein the set of controllers are configured to simultaneously perform at least one of the plurality of micro-services.
19. The non-transitory computer-readable medium of clause 18, wherein the safety island comprises a master fault manager,
   wherein the performance island comprises a slave fault manager communicatively coupled to the master fault manager,
   wherein the at least one container comprises a container fault manager communicatively coupled to the slave fault manager,
   wherein the computer-executable instructions configured for:
      monitoring, by the container fault manager, a first operability status of each of the one or more of the plurality of micro-services based on a set of KPIs;
      transmitting, by the container fault manager, the first operability status to the slave fault manager based on the monitoring of the first operability status; and
      monitoring, by the slave fault manager, a second operability status of the performance island based on: a first set of tests performed by the slave fault manager at predefined instances and the reception of the first operability status;
      transmitting, by the slave fault manager, the second operability status to the master fault manager based on the monitoring of the second operability status;
      monitoring, by the master fault manager, a third operability status of the safety island based on: a second set of tests performed by the master fault manager at the
   predefined instances and the reception of the second operability status; and transmitting, by the master fault manager, the third operability status to the VSM based on the monitoring of the third operability status.
20. The non-transitory computer-readable medium of clause 19, wherein the computer-executable instructions are configured for:
   relaunching, by the slave fault manager, the at least one container a predefined number of times in case the first operability status is determined as faulty; and
   relaunching, by the master fault manager, the corresponding controller from the plurality of controllers in case the second operability status is determined as faulty.

## Claims

1. A software defined vehicle, SDV, comprising:
a plurality of controllers, each comprising:
a safety island configurable to perform a plurality of services corresponding to one or more automotive safety integrity levels, ASILs, of a plurality of ASILs; and
a performance island configurable to perform a plurality of micro-services corresponding to one or more remaining ASILs of the plurality of ASILs, wherein the performance island comprises:
at least one node comprising:
at least one container configurable to perform one or more of the plurality of micro-services,
wherein one of the plurality of controllers is dynamically configurable as a Vehicle Safety Monitor, VSM, and a voter based on a predefined priority order,
wherein the VSM is configured to dynamically select a set of controllers from remaining controllers of the plurality of controllers based on a determined mode of the SDV, and
wherein the set of controllers are configured to simultaneously perform at least one micro-service of the plurality of micro-services.

2. The SDV of claim 1, wherein the safety island comprises a master fault manager,
wherein the performance island comprises a slave fault manager communicatively coupled to the master fault manager,
wherein the at least one container comprises a container fault manager communicatively coupled to the slave fault manager,
wherein the container fault manager is configured to:
monitor a first operability status of each of the one or more micro-services based on a set of key performance indicators, KPIs, and
transmit the first operability status to the slave fault manager based on the monitoring of the first operability status,
wherein the slave fault manager is configured to:
monitor a second operability status of the performance island based on: a first set of tests performed by the slave fault manager at predefined instances and the reception of the first operability status; and
transmit the second operability status to the master fault manager based on the monitoring of the second operability status;
wherein the master fault manager is configured to:
monitor a third operability status of the safety island based on: a second set of tests performed by the master fault manager at the predefined instances and the reception of the second operability status, and
transmit the third operability status to the VSM based on the monitoring of the third operability status.

3. The SDV of claim 2, wherein the slave fault manager is configured to relaunch the at least one container a predefined number of times where the first operability status is determined as faulty, and
wherein the master fault manager is configured to relaunch the corresponding controller from the plurality of controllers where the second operability status is determined as faulty.

4. The SDV of claim 3, wherein where the one of the plurality of controllers is determined as faulty based on the third operability status, one of the remaining of the plurality of controllers is configured as the VSM and the voter based on the predefined priority order, and
where one of the set of controllers is determined as faulty based on the third operability status, the VSM is configured to dynamically update the set of controllers from rest of the remaining controllers based on the determined mode.

5. The SDV of claim 4, wherein the plurality of services comprises a plurality of critical services, a set of sensor services and a shadow-VSM service, and
wherein the plurality of micro-services comprises a data acquisition service, a perception service, and a decision-making service,
wherein the performance island of the one of the plurality of controllers is configurable to implement the voter,
wherein the voter is configured to compare outputs of the at least one of the plurality of micro-services simultaneously performed by each of the set of controllers,
wherein the determined mode is a normal mode where the outputs from each of the set of controllers are the same,
wherein the mode is a degraded mode where output of one of the set of controllers is not the same as the outputs of rest of the set of controllers, and
wherein the mode is an emergency mode where each of the outputs of the set of controllers are not the same;
optionally wherein in the degraded mode, where one of the set of remaining controllers is determined as faulty, the VSM is configured to dynamically select one of the rest of the remaining controllers to replace the faulty controller in the set of controllers.

6. The SDV of any of claims 1-5, wherein the one or more ASILs at which the plurality of services are performed by the safety island are of higher priority than the one or more remaining ASILs at which the plurality of micro-services are performed by the performance island.

7. A functionally safe automotive controller of a software defined vehicle, SDV, the controller comprising:
a safety island configurable to perform a plurality of services corresponding to one or more automotive safety integrity levels, ASILs, of a plurality of ASILs; and
a performance island configurable to perform a plurality of micro-services corresponding to one or more remaining safety levels of the plurality of ASILs, wherein the performance island comprises:
at least one node comprising:
at least one container configurable to perform one or more of the plurality of micro-services.

8. The controller of claim 7, wherein the safety island comprises a master fault manager,
wherein the performance island comprises a slave fault manager communicatively coupled to the master fault manager,
wherein the at least one container comprises a container fault manager communicatively coupled to the slave fault manager,
wherein the container fault manager is configured to:
monitor a first operability status of each of the one or more of the plurality of micro-services based on a set of key performance indicators, KPIs, and
transmit the first operability status to the slave fault manager based on the monitoring of the first operability status,
wherein the slave fault manager is configured to:
monitor a second operability status of the performance island based on: a first set of tests performed by the slave fault manager at predefined instances and the reception of the first operability status; and
transmit the second operability status to the master fault manager based on the monitoring of the second operability status; and
wherein the master fault manager is configured to:
monitor a third operability status of the safety island based on: a second set of tests performed by the master fault manager at the predefined instances and the reception of the second operability status.

9. The controller of claim 8, wherein the slave fault manager is configured to relaunch the at least one container a predefined number of times where the first operability status is determined as faulty, and
wherein the master fault manager is configured to relaunch the controller where the second operability status is determined as faulty,
optionally wherein:
the plurality of services comprises a plurality of critical services, a set of sensor services, a Vehicle Safety Monitor, VSM, service and a shadow-VSM service; and
the plurality of micro-services comprises a data acquisition service, a perception service, and a decision making service,
wherein the performance island of the controller is configurable as a voter,
wherein the voter is configured to compare output of the controller with outputs of a plurality of external controllers, and
wherein the SDV is determined to be in one mode of a plurality of modes based on the comparison.

10. The controller of any of claims 7-9, wherein the one or more ASILs at which the plurality of services are performed by the safety island are of higher priority than the one or more remaining ASILs at which the plurality of micro-services are performed by the performance island.

11. A method of providing functional safety of a controller of a software defined vehicle, SDV, the method comprising:
dynamically configuring one of a plurality of controllers as a Vehicle Safety Monitor, VSM, and a voter based on a predefined priority order;
dynamically selecting, by the VSM, a set of controllers from remaining of the plurality of controllers based on a determined mode of the SDV,
wherein each of the plurality of controllers comprises:
a safety island configurable to perform a plurality of services corresponding to one or more automotive safety integrity levels, ASILs, from a plurality of ASILs; and
a performance island configurable to perform a plurality of micro-services corresponding to one or more remaining ASILs from the plurality of ASILs, wherein the performance island comprises:
at least one node comprising:
at least one container configurable to perform one or more of the plurality of micro-services, and
wherein the set of controllers are configured to simultaneously perform at least one of the plurality of micro-services.

12. The method of claim 11, wherein the safety island comprises a master fault manager,
wherein the performance island comprises a slave fault manager communicatively coupled to the master fault manager,
wherein the at least one container comprises a container fault manager communicatively coupled to the slave fault manager,
wherein the method comprises:
monitoring, by the container fault manager, a first operability status of each of the one or more of the plurality of micro-services based on a set of key performance indicators, KPIs;
transmitting, by the container fault manager, the first operability status to the slave fault manager based on the monitoring of the first operability status; and
monitoring, by the slave fault manager, a second operability status of the performance island based on: a first set of tests performed by the slave fault manager at predefined instances and the reception of the first operability status;
transmitting, by the slave fault manager, the second operability status to the master fault manager based on the monitoring of the second operability status;
monitoring, by the master fault manager, a third operability status of the safety island based on: a second set of tests performed by the master fault manager at the predefined instances and the reception of the second operability status; and
transmitting, by the master fault manager, the third operability status to the VSM based on the monitoring of the third operability status.

13. The method of claim 12, comprising:
relaunching, by the slave fault manager, the at least one container a predefined number of times where the first operability status is determined as faulty; and
relaunching, by the master fault manager, the corresponding controller from the plurality of controllers where the second operability status is determined as faulty,
optionally wherein:
where the one of the plurality of controllers is determined as faulty based on the third operability status, one of the remaining plurality of controllers is configured as the VSM and the voter based on the predefined priority order, and
where one of the set of controllers is determined as faulty based on the third operability status, the VSM is configured to dynamically update the set of controllers from the rest of the remaining controllers based on the determination of one of the plurality of modes.

14. The method of any of claims 11-13, wherein the one or more ASILs at which the plurality of services are performed by the safety island are of higher priority than the one or more remaining ASILs at which the plurality of micro-services are performed by the performance island.

15. A non-transitory computer-readable medium storing computer-executable instructions for providing functional safety of a controller of a software defined vehicle (SDV), the computer-executable instructions, when executed by at least one processor, cause the method of any of claims 11-14 to be performed at the SDV.
